(19) **Europäisches Patentamt / European Patent Office / Office européen des brevets**

(11) **EP 3 748 651 B1**

(12) **EUROPEAN PATENT SPECIFICATION**

(45) Date of publication and mention
of the grant of the patent:
**02.08.2023 Bulletin 2023/31**

(21) Application number: **18903424.2**

(22) Date of filing: **01.02.2018**

(51) International Patent Classification (IPC):
**G21C 17/00** (2006.01)      **G21D 3/00** (2006.01)

(52) Cooperative Patent Classification (CPC):
**G21D 3/002; Y02E 30/00**

(86) International application number:
**PCT/CN2018/074937**

(87) International publication number:
**WO 2019/148420 (08.08.2019 Gazette 2019/32)**

(54) **REACTOR THREE-DIMENSIONAL ASSEMBLY INFORMATION TRACKING METHOD AND SYSTEM**

VERFAHREN UND SYSTEM ZUR VERFOLGUNG VON INFORMATIONEN EINER DREIDIMENSIONALEN ANORDNUNG EINES REAKTORS

PROCÉDÉ ET SYSTÈME DE SUIVI D'INFORMATIONS D'ASSEMBLAGE TRIDIMENSIONNEL DE RÉACTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.12.2020 Bulletin 2020/50**

(73) Proprietor: **STATE POWER INVESTMENT CORPORATION RESEARCH INSTITUTE**
**Changping, Beijing 102209 (CN)**

(72) Inventors:
• **QUAN, Guoping**
  **Beijing 102209 (CN)**
• **SU, Jincheng**
  **Beijing 102209 (CN)**
• **YU, Hui**
  **Beijing 102209 (CN)**
• **WANG, Su**
  **Beijing 102209 (CN)**
• **WANG, Changhui**
  **Beijing 102209 (CN)**
• **WANG, Xing**
  **Beijing 102209 (CN)**
• **LI, Shuo**
  **Beijing 102209 (CN)**
• **YAN, Yuhang**
  **Beijing 102209 (CN)**
• **HAN, Wenjing**
  **Beijing 102209 (CN)**
• **ZHU, Chenglin**
  **Beijing 102209 (CN)**
• **CHEN, Yixue**
  **Beijing 102209 (CN)**

(74) Representative: **advotec.**
**Patent- und Rechtsanwaltspartnerschaft Tappe mbB**
**Widenmayerstraße 4**
**80538 München (DE)**

(56) References cited:
**WO-A1-2012/170156      WO-A2-2009/134498**
**CN-A- 104 269 197      CN-A- 105 895 173**
**CN-A- 105 934 797      CN-A- 106 328 226**
**JP-A- H0 875 891      JP-A- 2008 051 509**
**US-A- 5 225 147**

• **Poston David I: "User's Manual, Version 1.00 for Monteburns, version 3.01", , 16 June 1998 (1998-06-16), pages 1-76, XP055836376, Retrieved from the Internet: URL:https://www.osti.gov/servlets/purl/307 942 [retrieved on 2021-08-31]**

## Description

## TECHNICAL FIELD

The present disclosure relates to a technical field of reactor design, and more particularly, to a method and system for tracking three-dimensional assembly information of a reactor.

## BACKGROUND

In the design process of a reactor, the most important thing is to simulate neutron characteristics in the reactor. The final macroscopic manifestation of the neutron characteristics is power distribution of the reactor. The power distribution as well as effects such as neutron irradiation will then cause changes in information such as materials and dimensions of fuels and moderators. The above changes in turn affect changes in neutron characteristics. Therefore, it is very important to track information in the fuel assembly, regardless of the design of the reactor, numerical simulation or the operation of the reactor.

During the operation of the reactor, the fuel assembly in the reactor is usually replaced in stages, each stage referred to as a refueling cycle. In each refueling cycle, different fuel assemblies will be provided in the reactor based on power generation requirements and safety requirements. Each fuel assembly is composed of fuel rods, burnable poison rods, guide tubes and measurement tubes as basic cells, and grids arranged in a specific form. And each fuel assembly will be provided with different enrichment of fuel pellets and different arrangement of burnable poison rods. Consequently, complex fuel management content is formed. In order to facilitate fuel management of the fuels, axial areas where fuels, poisons, etc. are arranged in the same manner being determined as the same kind of fuel segments, a great number of fuel assemblies are divided into a small number of fuel segments. According to the current tracking method for assembly information, the same fuel segments distributed in different positions are deemed as having similar properties, so that by tracking information of the fuel segments, information of the fuel assemblies at different positions can be approximately obtained. However, the current tracking method for the assembly information ignores information differences (such as nuclide information, history information, etc.) between the same kind of fuel segments in the different assemblies, and only uses an average concept to track information of the fuels, resulting in low accuracy in information tracking.

In both documents WO 2012/170 156 A1 and WO 2009/134 498 A2, a method for modeling a nuclear reactor core that follows the history of each fuel pin and employs fuel pin flux form factors to explicitly track each fuel pin's fluence and burnup along its axial length and uses this information to obtain fundamental data for each fuel rod, i.e. fuel rod cross-sections, for each fuel pin segment is disclosed.

## SUMMARY

The present disclosure aims to solve at least one of the above technical problems in related technologies to some extent.

Therefore, a first object of the present disclosure is to provide a method for tracking three-dimensional assembly information of a reactor according to the subject matter of independent claim 1. The method takes into account information such as the depletion history of a three-dimensional fuel assembly in the core, and may perform accurate three-dimensional tracking on information of each three-dimensional fuel assembly in the reactor, thereby improving the design accuracy and reliability of the reactor.

A second object of the present disclosure is to provide a system for tracking three-dimensional assembly information of a reactor according to the subject matter of independent claim 6.

A third object of the present disclosure is to provide a device.

A fourth object of the present disclosure is to provide a non-volatile computer storage medium.

To realize the above objects, embodiments of a first aspect of the present disclosure provide a method for tracking three-dimensional assembly information of a reactor, including: modeling a three-dimensional fuel assembly in the reactor to obtain a three-dimensional fuel assembly model; dividing the three-dimensional fuel assembly model into a plurality of nodes in an axial direction of the three-dimensional fuel assembly, based on an arrangement of fuel segments in the axial direction; calculating fuel segment information of all the fuel segments and nodal information of the plurality of nodes in the axial direction of the three-dimensional fuel assembly; and obtaining the three-dimensional assembly information of the three-dimensional fuel assembly based on the fuel segment information and the nodal information, and storing the three-dimensional assembly information.

With the method for tracking the three-dimensional assembly information of the reactor according to embodiments of the present disclosure, three-dimensional modeling is performed on the three-dimensional fuel assembly in the reactor, and the three-dimensional fuel assembly model is divided into the plurality of nodes in the axial direction. The fuel segment information of the fuel segments and the nodal information of the plurality of nodes in the axial direction of the three-dimensional fuel assembly are calculated. The three-dimensional assembly information of the three-dimensional fuel assembly is obtained based on the fuel segment information and the nodal information. That is, the method takes into account the information such as the depletion history of the three-dimensional fuel assembly in the core, and may perform accurate three-dimensional tracking on information of each three-dimensional fuel assembly in the reactor, thereby enhancing the convenience in the design process of the reactor, reducing influences of human factors in the design process, and improving the design accuracy and reliability of the reactor.

To realize the above objects, embodiments of a second aspect of the present disclosure provide a system for tracking three-dimensional assembly information of a reactor, including: a modeling module, configured to model a three-dimensional fuel assembly in the reactor to obtain a three-dimensional fuel assembly model; a model division module, configured to divide the three-dimensional fuel assembly model into a plurality of nodes in an axial direction of the three-dimensional fuel assembly, based on an arrangement of fuel segments in the axial direction; an information calculation module, configured to calculate fuel segment information of all the fuel segments and nodal information of the plurality of nodes in the axial direction of the three-dimensional fuel assembly; and a storage module, configured to obtain the three-dimensional assembly information of the three-dimensional fuel assembly based on the fuel segment information and the nodal information, and to store the three-dimensional assembly information.

To realize the above objects, a third aspect of the present disclosure provides a device. The device includes one or more processors, a storage device, and one or more programs stored in the storage device. When the one or more programs are executed by the one or more processors, the method for tracking the three-dimensional assembly information of the reactor according to the above embodiments is implemented.

To realize the above objects, embodiments of a fourth aspect of the present disclosure provide a non-volatile computer storage medium having one or more programs stored thereon. When the one or more programs are executed by a device, the device implements the method for tracking the three-dimensional assembly information of the reactor according to the above embodiments.

Additional aspects and advantages of embodiments of present disclosure will be given in part in the following descriptions, become apparent in part from the following descriptions, or be learned from the practice of the embodiments of the present disclosure.

**BRIEF DESCRIPTION OF THE DRAWINGS**

These and other aspects and advantages of embodiments of the present disclosure will become apparent and more readily appreciated from the following descriptions made with reference to the accompanying drawings.

FIG. 1 is a flowchart of a method for tracking three-dimensional assembly information of a reactor according to an embodiment of the present disclosure.
FIG. 2 is a schematic diagram of a three-dimensional fuel assembly.
FIG. 3 is a schematic diagram of an arrangement of fuel rods in a fuel assembly.
FIG. 4 is a schematic diagram of a fuel rod.
FIG. 5 is a schematic diagram of material segmentation of a three-dimensional fuel assembly.
FIG. 6 is a schematic diagram of storage of three-dimensional assembly information of a three-dimensional fuel assembly according to an embodiment of the present disclosure.
FIG. 7 is a block diagram of a system for tracking three-dimensional assembly information of a reactor according to an embodiment of the present disclosure.
FIG. 8 is a block diagram of a system for tracking three-dimensional assembly information of a reactor according to another embodiment of the present disclosure.
FIG. 9 is a block diagram of a modeling module of a system for tracking three-dimensional assembly information of a reactor according to an embodiment of the present disclosure.

**DETAILED DESCRIPTION**

Descriptions will now be made in detail to embodiments, examples of which are illustrated in the accompanying drawings. The same or similar elements and the elements having same or similar functions are denoted by like reference numerals throughout the descriptions. The embodiments described herein with reference to the drawings are explanatory, illustrative, and used to generally understand the present disclosure. The embodiments shall not be construed to limit the present disclosure.

In the description of the present disclosure, it is to be understood that, terms such as "center", "longitudinal", "over", "below", "front", "back", "left", "right", "vertical", "horizontal", "top", "bottom", "in" and "out" refer to the directions and location relations which are the directions and location relations shown in the drawings, and for describing the present disclosure and for describing in simple, and which are not intended to indicate or imply that the device or the elements are disposed to locate at the specific directions or are structured and performed in the specific directions, which could not to be understood as a limitation of the present disclosure. In addition, terms such as "first" and "second" are used herein for purposes of description and are not intended to indicate or imply relative importance or significance.

In the present disclosure, it should be noted that unless specified or limited otherwise, the terms "mounted", "connected" and "coupled" are understood broadly, such as fixed, detachable mountings, connections and couplings or integrated, and can be mechanical or electrical mountings, connections and couplings, and also can be direct and via media indirect mountings, connections, and couplings, and further can be inner mountings, connections and couplings of two components, which can be understood by those skilled in the art according to the detail embodiment of the present disclosure.

A tracking method and system for three-dimensional assembly information of a reactor according to embodiments of the present disclosure will be described below with reference to the drawings.

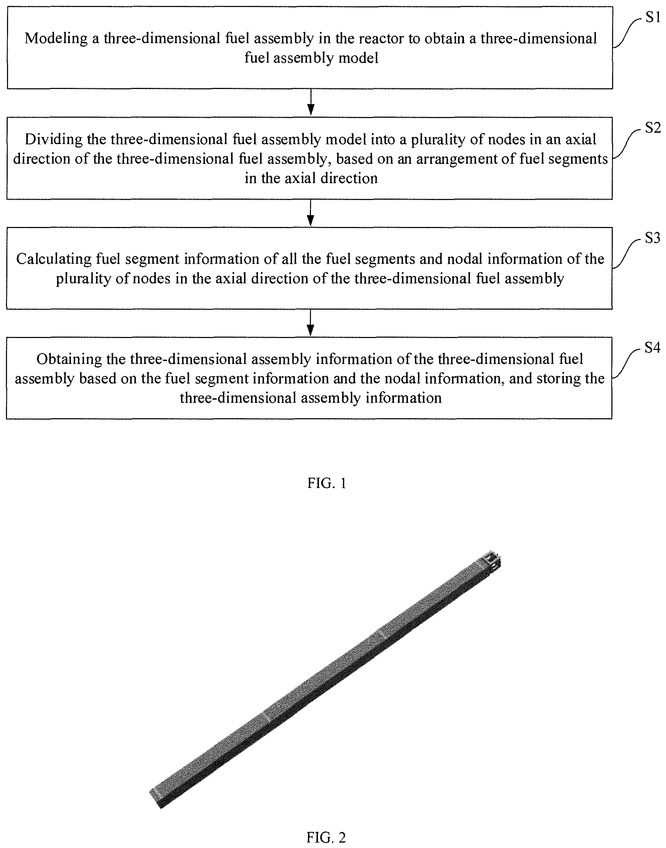

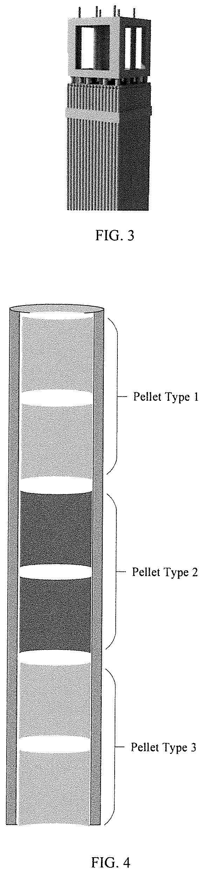

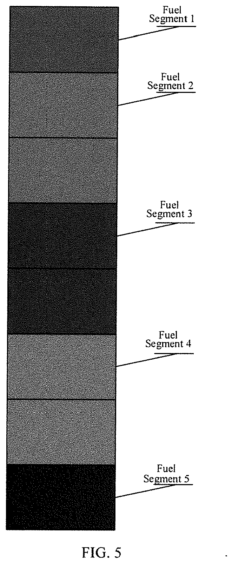

Before introducing the method for tracking the three-dimensional assembly information of the reactor according to an embodiment of the present disclosure, a three-dimensional fuel assembly and internal components of the three-dimensional fuel assembly will be described with reference to FIGS 2 to 5. As illustrated in FIG. 2, a three-dimensional fuel assembly commonly used in pressurized-water-reactor nuclear-power plants is used as an example for description. The three-dimensional fuel assembly is formed by fuel rods arranged in a rectangular arrangement and fixed by a spacer grid. As illustrated in FIG. 3, for example, the top and bottom of the three-dimensional fuel assembly have two nozzles, respectively, for fixing the three-dimensional fuel assembly. As illustrated in FIG. 4, for example, a fuel rod is of a tubular structure, and loaded with fuel pellets. Different three-dimensional fuel assemblies are designed by different fuel pellets loading. As illustrated in FIG. 5, for example, the three-dimensional fuel assembly is divided into a series of segments along an axial direction based on structures (including upper and lower reflectors), types of the fuel pellets, and so on. Each segment has the same properties, and is called a fuel segment.

FIG. 1 is a flowchart of a method for tracking three-dimensional assembly information of a reactor according to an embodiment of the present disclosure. As illustrated in FIG. 1, the method for tracking the three-dimensional assembly information of the reactor according to the embodiment of the present disclosure includes the following steps.

In step S1, a three-dimensional fuel assembly in the reactor is modeled to obtain a three-dimensional fuel assembly model.

In detail, a real three-dimensional fuel assembly is of a three-dimensional structure composed of a series of basic cells and grids such as fuel rods, guide tubes, measurement tube, etc.. The three-dimensional modeling of the three-dimensional fuel assembly needs to describe a structure of each component, fuel segment information, axial distribution information, etc. On this basis, in an embodiment of the present disclosure, modeling the three-dimensional fuel assembly in the reactor further includes the following steps.

In step S11, different fuel rods are modeled. Specifically, the process includes: obtaining fuel rod modeling information, and modeling each type of fuel rod in the three-dimensional fuel assembly based on the fuel rod modeling information. The fuel rod modeling information includes geometric dimensions of the fuel rod, such as geometric dimensions of clad, fuel pellet and gap, pitch of fuel rods, size of water gap, position and material in each region.

In step S12, a guide tube is modeled. Specifically, the process includes: obtaining guide tube modeling information, and modeling a guide tube in the three-dimensional fuel assembly based on the guide tube modeling information to obtain a guide tube model. The guide tube modeling information includes geometric dimensions, a material and a composition of the material of the guide tube. Further, the process includes: determining whether a poison rod or a control rod are inserted into the guide tube. If the poison rod or the control rod has been inserted into the guide tube, the guide tube modeling information may further include geometric dimensions, materials and compositions of the materials of the poison rod or the control rod.

In step S13, a measurement tube is modeled. Measurement tube modeling information is obtained, and the measurement tube in the three-dimensional fuel assembly is modeled based on the measurement tube modeling information to obtain a measurement tube model. The measurement tube modeling information includes geometric dimensions, a material and a composition of the material of the measurement tube. In addition, it is determined whether a detector is inserted into the measurement tube. In response to the detector being inserted into the measurement tube, the measurement tube modeling information includes geometric dimensions, a material and a composition of the material of the detector.

In step S14, a grid is modeled. Grid modeling information is obtained, and the grid in the three-dimensional fuel assembly is modeled based on the grid modeling information to obtain a grid model. The grid modeling information includes geometric dimensions, a material and a composition of the material of the grid. In addition, the grid includes, for example, a spacer grid and a mixing grid. On the basis, the grid modeling information includes geometric dimensions, a material and a composition of the material of the spacer grid, and geometric dimensions, a material and a composition of the material of the mixing grid.

In step S 15, radial modeling is performed on a three-dimensional fuel assembly. Arrangement information of basic cells and grids such as the fuel rods, the guide tube, the measurement tubes and burnable poison rods in a radial direction of the three-dimensional fuel assembly is obtained, and a radial arrangement is performed on basic cell models and grid models such as the fuel rod model, the guide tube model, the measurement tube model and a burnable poison model based on the arrangement information, so as to form radial arrangement information of the three-dimensional fuel assembly. It should be noted that in embodiments of the present disclosure, different radial arrangements are referred to as different "fuel segments".

In step S 16, a reflector is modeled. In detail, each three-dimensional fuel assembly is usually supported by structural materials at its upper and lower ends. A mixture of these structural materials and water is called a reflector. On the basis, modeling the reflector includes obtaining reflector modeling information, and modeling the reflector of the three-dimensional fuel assembly based on the reflector modeling information to obtain a reflector model. The reflector modeling information includes geometric dimensions, a material and a composition of the material of the reflector.

In step S 17, an axial arrangement of the three-dimensional fuel assembly is modeled. In detail, a real three-dimensional fuel assembly is usually formed by the reflector and different fuel segments. On the basis, modeling the axial arrangement of the three-dimensional fuel assembly includes obtaining position information of the reflector and the fuel segments of the three-dimensional fuel assembly in the axial direction of the three-dimensional fuel assembly, and modeling an axial arrangement of the three-dimensional fuel assembly model based on the position information of the reflector and all the fuel segments in the axial direction of the three-dimensional fuel assembly.

At block S2: the three-dimensional fuel assembly model is divided, based on an arrangement of fuel segments in an axial direction of the three-dimensional fuel assembly, into a plurality of nodes in the axial direction. In detail, this step relates to the division of the three-dimensional fuel assembly model. The division of the three-dimensional fuel assembly model here may refer to an axial division of the three-dimensional fuel assembly. It should be noted that a height of each node obtained by division may be identical or different, but it is necessary to ensure that boundaries of the fuel segments are also boundaries of the nodes.

At block S3, fuel segment information of the fuel segments and nodal information of the plurality of nodes in the axial direction of the three-dimensional fuel assembly are calculated.

In detail, calculating the fuel segment information of the fuel segments and the nodal information of the plurality of nodes in the axial direction of the three-dimensional fuel assembly comprises calculating the fuel segment information and the nodal information. Calculating the fuel segment information refers to traversing each fuel segments of the three-dimensional fuel assembly and calculating nuclide information and cross-section information at different burnup points for said fuel segment through a first preset calculation procedure. Calculating the nodal information refers to calculating nuclide information and burnup information in each of the nodes through a second preset calculation procedure. The first preset calculation procedure is, for example, a two-dimensional neutron transport calculation program. The second preset calculation procedure is, for example, a three-dimensional diffusion calculation program.

At block S4, three-dimensional assembly information of the three-dimensional fuel assembly is obtained based on the fuel segment information and the nodal information, and the three-dimensional assembly information is stored.

In detail, the three-dimensional assembly information includes, for example, parameters of the fuel segments, geometric information and cell configuration information of the fuel segments, arrangement information of the fuel segments, assembly burnup-distribution information, assembly history information, nuclear density change information, assembly rod-replacing information, assembly archival information and assembly numbering information.

On the basis, in an embodiment of the present disclosure, obtaining the parameters of the fuel segments of the three-dimensional fuel assembly based on the fuel segment information and the nodal information includes performing calculation for resonance and neutron transport of the fuel segments through a third preset calculation procedure, to obtain few-group cross-section parameters at different burnup depths and cross-section correction parameters for each fuel segment, and nuclear density distribution information in said fuel segment. Further, the method includes changing a state of the fuel segment at different burnup depths, and performing calculations for resonance and neutron transport of the fuel segment in different states to obtain the few-group cross-section parameters in different states. Changing the state of the fuel segment includes changing state parameters such as a water density, a fuel temperature and a boron concentration of the fuel segment. The third preset calculation procedure is, for example, a three-dimensional assembly parameter calculation program.

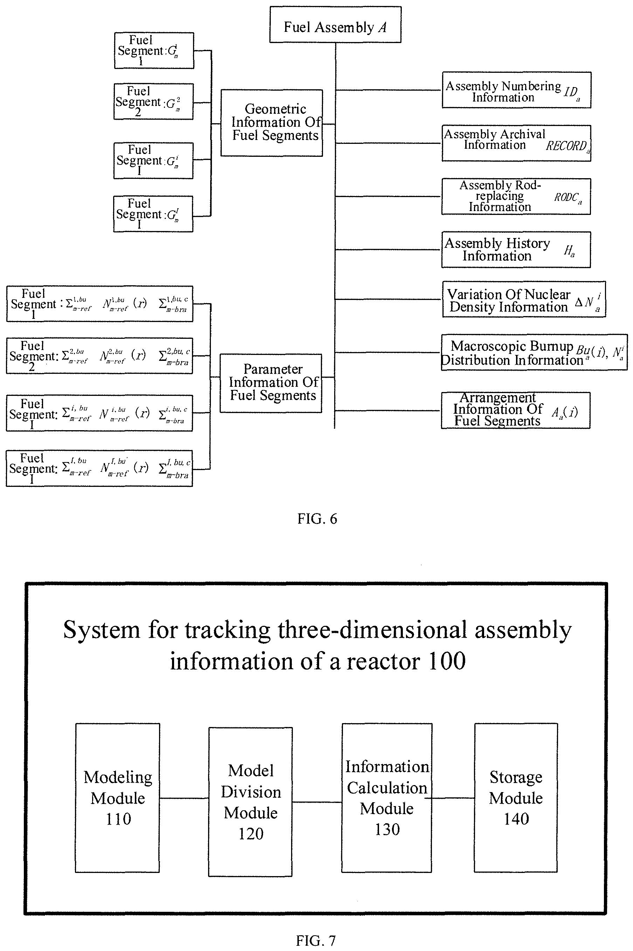

Taking FIG. 6 as an example, the calculation for the resonance and neutron transport of each fuel segment is performed through the three-dimensional assembly parameter calculation procedure to obtain the few-group cross-section parameters $\Sigma_{m-ref}^{i,bu}$ of each fuel segment at different burnup depths Bu, where i=1~I, i represents a sequence number of a fuel segment and Bu represents different burnup depths, and a distribution $N_{m-ref}^{i,bu}(r)$ of the nuclear density in the fuel segment. The subscript m represents the fuel segment, which is configured to distinguish the fuel segment from the three-dimensional fuel assembly. Further, for each fuel segment, at different burnup depths Bu, branch calculations in various states (such as: changing the water density, the fuel temperature, the boron concentration, etc.) are performed to calculate the few-group cross-section parameters $\Sigma_{m-bra}^{i,bu,c}$ (c represents different branch states) under different branches.

In an embodiment of the present disclosure, the above-mentioned fuel segment geometric and grid element configuration information include, for example: an arrangement rule, geometric dimensions and water gap dimensions of basic cells such as fuel rods, burnable poison rods, a conduit and a measurement tube in an individual fuel segment, geometric dimensions of the three-dimensional fuel assembly in an individual fuel segment, and geometric dimensions of a spacer grid in an individual fuel segment. As illustrated in FIG. 6, each fuel segment is formed by basic cells such as the fuel rods arranged based on certain rules. The arrangement rule, the geometric dimensions and the water gap dimensions of basic cells such as the fuel rods, the geometric dimensions of the three-dimensional fuel assembly in an individual fuel segment, and the geometric dimensions of the spacer grid in an individual fuel segment collectively constitute the geometric and grid element configuration information of the fuel segment, which is represented by, for example, $G_m^i$.

In an embodiment of the present disclosure, the arrangement information of the fuel segments indicates an arrangement of the fuel segments in the three-dimensional fuel assembly in a sequence from bottom to top. Taking FIG. 6 as an example, fuel segments in one three-dimensional fuel assembly are arranged in a sequence from bottom to top, and arrangement information of sequence numbers of the fuel segments is provided as $A_a(i)$, where the subscript $a$ represents the three-dimensional fuel assembly.

In an embodiment of the present disclosure, obtaining, based on the fuel segment information and the nodal information, the assembly burnup-distribution information of the three-dimensional fuel assembly includes: obtaining burnup depths of respective fuel segments in the three-dimensional fuel assembly; obtaining burnup depths of the cells in respective fuel segments in the three-dimensional fuel assembly; obtaining the assembly burnup-distribution information of the three-dimensional fuel assembly based on the burnup depths of respective fuel segments; and recording nuclear density information of critical nuclides of the three-dimensional fuel assembly. For example, in FIG. 6, a three-dimensional fuel assembly is put into a reactor for depletion. Since the power of the reactor is distributed differently, different positions (corresponding to different fuel segments) of the three-dimensional fuel assembly have different burnup depths. The burnup depth distribution $Bu_a(i)$ is called macroscopic burnup distribution information of the three-dimensional fuel assembly. At the same time, the nuclear density information $N_a^i$ of critical nuclides of the three-dimensional fuel assembly is recorded. The information obtained above is stored in a storage file of the three-dimensional assembly information.

In an embodiment of the present disclosure, the assembly history information includes, for example, a burnup process, a refueling cycle, a poison treatment process that the three-dimensional fuel assembly has undergone, a time period during which the three-dimensional fuel assembly is placed in a spent fuel pool, damage information of the three-dimensional fuel assembly, and replacement information of the fuel rods. In detail, in embodiments of the present disclosure, a process of the three-dimensional fuel assembly from being produced to being sent out of a power plant as spent fuel after fully burning is called the history of the three-dimensional fuel assembly. For example, as illustrated in FIG. 6, an entire history process of the three-dimensional fuel assembly is recorded, such as how many refueling cycles the three-dimensional fuel assembly has experienced, how to treat the poison, the time the three-dimensional fuel assembly has been placed in the spent fuel pool, whether the three-dimensional fuel assembly has been damaged, whether fuel rods have been replaced, and which fuel rods were replaced. The history information of the three-dimensional fuel assembly is represented by, for example, $H_a$.

In an embodiment of the present disclosure, obtaining, based on the fuel segment information and the nodal information, the nuclear density change information of the three-dimensional fuel assembly comprises: obtaining nuclear density information and a time period during which the three-dimensional fuel assembly is placed in a spent fuel pool; and calculating, based on the nuclear density information and the time the three-dimensional fuel assembly is placed in the spent fuel pool, the nuclear density change information through a fourth preset calculation procedure. The fourth preset calculation procedure is, for example, a burnup calculation program. In detail, when the three-dimensional fuel assembly is placed in the spent fuel pool, various nuclides also undergo nuclear reactions, such as decay reactions. In embodiments of the present disclosure, the history that the three-dimensional fuel assembly is placed in the spent fuel pool is used as a part of storage information. For example, as illustrated in FIG. 6, the burnup calculation program is used to calculate a variation $\Delta N_a^i$ of the nuclear density information based on the nuclear density information $N_a^i$ generated during the calculation of the assembly burnup-distribution information and information of the time the three-dimensional fuel assembly placed in the spent fuel pool stored in the assembly history information, so as to update the nuclear density information.

In an embodiment of the present disclosure, obtaining, based on the fuel segment information and the nodal information, the assembly rod-replacing information of the three-dimensional fuel assembly includes, recording geometric information, a material and a composition of the material of the replaced fuel rod, and poison information when the fuel rod is replaced. In detail, in the actual operation of the reactor, an operation of changing rods often occurs. For example, during the operation of the reactor, fuel rods are often damaged. In this case, a certain fuel rod needs to be replaced to avoid radiation leakage; and sometimes a poison rod is extracted or replaced. Therefore, it is necessary to record information of the fuel rod replaced in the assembly, such as the geometric information, the material and the composition of the material of the fuel rod replaced, and the poison information. In the example illustrated in FIG. 6, the assembly rod replacement information is represented by, for example, $RODC_a$.

In an embodiment of the present disclosure, obtaining, based on the fuel segment information and the nodal information, the assembly archival information of the three-dimensional fuel assembly includes numbering a file of an individual three-dimensional fuel assembly based on a preset rule. The three-dimensional fuel assembly has a unique archival number storing information of the three-dimensional fuel assembly. For example, as illustrated in FIG. 6, a file of each three-dimensional fuel assembly is numbered and is called the assembly archival information, which is represented by $RECORD_a$. The assembly archival information has two main characteristics: 1) each three-dimensional fuel assembly has a unique archival number storing information of the three-dimensional fuel assembly; and 2) there are certain rules (preset rules) to ensure that archival numbers will not be identical to each other. For example, a cycle number and a position of a three-dimensional fuel assembly first loaded into the core are used as the archival number of the assembly. The archival number of the three-dimensional fuel assembly placed at a position of R08 in the first cycle is C01R08.

In an embodiment of the present disclosure, obtaining, based on the fuel segment information and the nodal information, the assembly numbering information of the three-dimensional fuel assembly includes, in a process of fabricating the three-dimensional fuel assembly, numbering the three-dimensional fuel assembly. The number is, for example, stored in the storage file of the three-dimensional assembly information to facilitate a user to connect a virtual assembly to a physical assembly. In the example illustrated in FIG. 6, the assembly numbering information is represented by $ID_a$.

In an embodiment of the present disclosure, after obtaining all the above three-dimensional assembly information, for example, after all the above three-dimensional assembly information is stored in the storage file of the three-dimensional assembly information, three-dimensional assembly information corresponding to different three-dimensional fuel assemblies is formed. The storage structure of the three-dimensional fuel assembly is as illustrated in FIG. 6.

In an embodiment of the present disclosure, the method further includes, for example, inputting a three-dimensional assembly information query instruction; and reading, based on the three-dimensional assembly information query instruction, three-dimensional assembly information of a three-dimensional fuel assembly to be queried from the three-dimensional assembly information stored. In detail, for example, when three-dimensional assembly information of a specified three-dimensional fuel assembly needs to be queried, it is only needed to input an instruction related to querying the three-dimensional assembly information of the specified three-dimensional fuel assembly to read the three-dimensional assembly information of the specified three-dimensional fuel assembly from the storage file of the three-dimensional assembly information, thereby greatly facilitating the user. The storage file of the three-dimensional assembly information stores the three-dimensional assembly information of all three-dimensional fuel assemblies.

In an embodiment of the present disclosure, the method further includes, for example, detecting whether the three-dimensional assembly information has changed; and in response to a change of the three-dimensional assembly information, updating the three-dimensional assembly information. In detail, when three-dimensional assembly information of a certain three-dimensional fuel assembly in the stored three-dimensional assembly information changes (such as a nuclide information change, a geometric change, an arrangement change, etc.), the changed three-dimensional assembly information is used to replace the three-dimensional assembly information before the change to update the three-dimensional assembly information of the three-dimensional fuel assembly, and the updated three-dimensional assembly information is stored, thereby realizing information updates of the storage file of the three-dimensional assembly information.

In summary, with the method for tracking the three-dimensional assembly information of the reactor according to embodiments of the present disclosure, three-dimensional modeling is performed on the three-dimensional fuel assembly in the reactor, and the three-dimensional fuel assembly model is divided into the plurality of nodes in the axial direction. The fuel segment information of the fuel segments and the nodal information of the plurality of nodes in the axial direction of the three-dimensional fuel assembly are calculated. The three-dimensional assembly information of the three-dimensional fuel assembly is obtained based on the fuel segment information and the nodal information. That is, the method takes into account the information such as the depletion history of the three-dimensional fuel assembly in the core, and may perform accurate three-dimensional tracking on information of each three-dimensional fuel assembly in the reactor, thereby enhancing the convenience in the design process of the reactor, reducing influences of human factors in the design process, and improving the design accuracy and reliability of the reactor.

Embodiments of the present disclosure also provide a system for tracking three-dimensional assembly information of a reactor.

FIG. 7 is a block diagram of a system for tracking three-dimensional assembly information of a reactor according to an embodiment of the present disclosure. As illustrated in FIG. 7, a tracking system 100 for three-dimensional assembly information of a reactor includes a modeling module 110, a model division module 120, an information calculation module 130 and a storage module 140.

The modeling module 110 is configured to model a three-dimensional fuel assembly in the reactor to obtain a three-dimensional fuel assembly model.

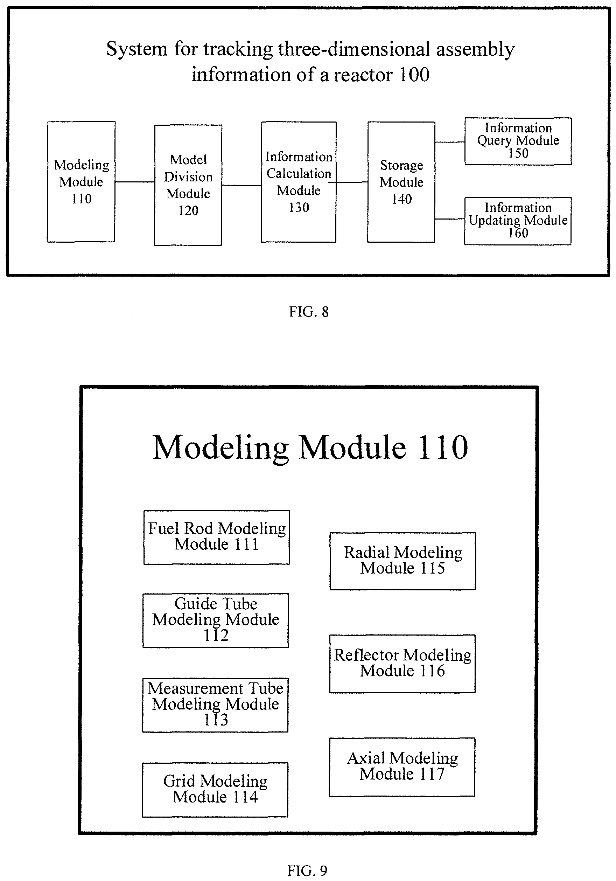

In detail, a real three-dimensional fuel assembly is of a cylindrical three-dimensional structure composed of a series of fuel rods, wiring conduits, and measurement tubes as basic cells, and grids. The three-dimensional modeling of the three-dimensional fuel assembly needs to describe a structure of each component, fuel segment information, axial distribution information, etc. On this basis, in an embodiment of the present disclosure, as illustrated in FIG. 9, the modeling module 110 includes, for example, a fuel rod modeling module 111, a guide tube modeling module 112, a measurement tube modeling module 113, a grid modeling module 114, a radial modeling module 115, a reflector modeling module 116, and an axial modeling module 117.

The fuel rod modeling module 111 is configured to obtain fuel rod modeling information, and to model fuel rods in the three-dimensional fuel assembly based on the fuel rod modeling information to obtain a fuel rod model. The fuel rod modeling information includes geometric dimensions of clad, geometric dimensions of a pellet, geometric dimensions of a gap, a pitch of adjacent fuel rods, a thickness of a water gap, a material and a composition of the material of a region of an individual fuel rod.

The guide tube modeling module 112 is configured to obtain guide tube modeling information, and to model a guide tube in the three-dimensional fuel assembly based on the guide tube modeling information to obtain a guide tube model. The guide tube modeling information includes geometric dimensions, a material and a composition of the material of the guide tube. The guide tube modeling module 112 is also configured to determine whether a poison and a control rod are inserted into the guide tube. In response to the poison and the control rod being inserted into the guide tube, the guide tube modeling information includes the poison, and geometric dimensions, a material and a composition of the material of the control rod.

The measurement tube modeling module 113 is configured to obtain measurement tube modeling information, and to model a measurement tube in the three-dimensional fuel assembly based on the measurement tube modeling information to obtain a measurement tube model. The measurement tube modeling information includes geometric dimensions, a material and a composition of the material of the measurement tube. The measurement tube modeling module 113 is also configured to determine whether a detector is inserted into the measurement tube. In response to the detector being inserted into the measurement tube, the measurement tube modeling information includes geometric dimensions, a material and a composition of the material of the detector.

The grid modeling module 114 is configured to obtain grid modeling information, and to model a grid in the three-dimensional fuel assembly based on the grid modeling information to obtain a grid model. The grid modeling information includes geometric dimensions, a material and a composition of the material of the grid. In addition, the grid includes, for example, a spacer grid and a mixing grid. On the basis, the grid modeling information includes geometric dimensions, a material and a composition of the material of the spacer grid, and geometric dimensions, a material and a composition of the material of the mixing vane grid.

The radial modeling module 115 is configured to obtain arrangement information of basic cells and grids such as the fuel rod, the guide tube, the measurement tube and the grid in a radial direction of the three-dimensional fuel assembly, and to perform a radial arrangement on basic cell models and grid models such as the fuel rod model, the guide tube model, the measurement tube model and a burnable poison model based on the arrangement information, so as to form radial arrangement information of the three-dimensional fuel assembly. It should be noted that in embodiments of the present disclosure, different radial arrangements are referred to as different "fuel segments".

Each three-dimensional fuel assembly is usually supported by structural materials at its upper and lower ends. A mixture of these structural materials and water is called a reflector. On the basis, the reflector modeling module 116 is configured to obtain reflector modeling information, and to model the reflector of the three-dimensional fuel assembly based on the reflector modeling information to obtain a reflector model. The reflector modeling information includes geometric dimensions, a material and a composition of the material of the reflector.

A real three-dimensional fuel assembly is usually formed by the reflector and different fuel segments. On the basis, the axial modeling module 117 is configured to obtain position information of the reflector and all the fuel segments of the three-dimensional fuel assembly in the axial direction of the three-dimensional fuel assembly, and to perform an axial arrangement modeling for the three-dimensional fuel assembly model based on the position information of the reflector and the fuel segments in the axial direction of the three-dimensional fuel assembly.

The model division module 120 is configured to divide, based on an arrangement of fuel segments in an axial direction of the three-dimensional fuel assembly, the three-dimensional fuel assembly model into a plurality of nodes in the axial direction. In detail, this module relates to the division of the three-dimensional fuel assembly model. The division of the three-dimensional fuel assembly model here may refer to an axial division of the three-dimensional fuel assembly. It should be noted that a height of each node obtained by division may be identical or different, but it is necessary to ensure that boundaries of the fuel segments are also boundaries of the nodes.

The information calculation module 130 is configured to calculate fuel segment information of all the fuel segments and nodal information of the plurality of nodes in the axial direction of the three-dimensional fuel assembly.

In detail, calculating the fuel segment information of all the fuel segments and the nodal information of the plurality of nodes in the axial direction of the three-dimensional fuel assembly by the information calculation module 130 includes: calculating the fuel segment information, that is, traversing each fuel segment of the three-dimensional fuel assembly and calculating nuclide information and cross-section information at different burnup points for said fuel segment through a first preset calculation procedure; and calculating the nodal information, that is, calculating nuclide information and burnup information in each of the nodes through a second preset calculation procedure. The first preset calculation procedure is, for example, a two-dimensional neutron transport calculation program. The second preset calculation procedure is, for example, a three-dimensional diffusion calculation program.

The storage module 140 is configured to obtain three-dimensional assembly information of the three-dimensional fuel assembly based on the fuel segment information and the nodal information, and to store the three-dimensional assembly information.

In detail, the three-dimensional assembly information includes, for example, parameters of the fuel segments, geometric information and cell configuration information of the fuel segments, arrangement information of the fuel segments, assembly burnup-distribution information, assembly history information, nuclear density change information, assembly rod-replacing information, assembly archival information and assembly numbering information.

On the basis, in an embodiment of the present disclosure, obtaining the parameters of the fuel segments of the three-dimensional fuel assembly based on the fuel segment information and the nodal information via the storage module 140 includes performing calculation for resonance and neutron transport of the fuel segments through a third preset calculation procedure to obtain few-group cross-section parameters of an individual fuel segment at different burnup depths and distribution information of a nuclear density in the fuel segment. Further, the storage module 140 is configured to change a state of the fuel segment at different burnup depths, and to perform calculation for the resonance and the neutron transport of the fuel segment in different states to obtain the few-group cross-section parameters in different states. Changing the state of the fuel segment includes changing a water density, a fuel temperature and a boron concentration of the fuel segment. The third preset calculation procedure is, for example, a three-dimensional assembly parameter calculation program.

In an embodiment of the present disclosure, the geometric information and the cell configuration information of the fuel segments includes, for example, arrangement rules, geometric dimensions, dimensions of water gaps, geometric dimensions of the three-dimensional fuel assembly, and geometric dimensions of spacer grids for the fuel rods, burnable poison rods, wiring conduits and measurement tubes in the fuel segment.

In an embodiment of the present disclosure, the arrangement information of the fuel segments indicates, for example, an arrangement of the fuel segments in the three-dimensional fuel assembly in a sequence from bottom to top.

In an embodiment of the present disclosure, obtaining, based on the fuel segment information and the nodal information, the assembly burnup-distribution information of the three-dimensional fuel assembly via the storage module 140 includes: obtaining burnup depths of respective fuel segments in the three-dimensional fuel assembly; obtaining burnup depths of the cells in respective fuel segments in the three-dimensional fuel assembly; obtaining the assembly burnup-distribution information of the three-dimensional fuel assembly based on the burnup depths of respective fuel segments; and recording nuclear density information of critical nuclides of the three-dimensional fuel assembly.

In an embodiment of the present disclosure, the assembly history information includes, for example, a burnup process of the three-dimensional fuel assembly, a refueling cycle, a poison treatment process that the three-dimensional fuel assembly has undergone, a time period during which the three-dimensional fuel assembly is placed in a spent fuel pool, damage information of the three-dimensional fuel assembly, and replacement information of the fuel rods. In detail, in embodiments of the present disclosure, a process of the three-dimensional fuel assembly from being produced to being sent out of a power plant as spent fuel after fully burning is called the history of the three-dimensional fuel assembly. In other words, an entire history process of the three-dimensional fuel assembly is recorded, such as how many refueling cycles the three-dimensional fuel assembly has undergone, how to treat the poison, the time the three-dimensional fuel assembly has been placed in the spent fuel pool, whether the three-dimensional fuel assembly has been damaged, whether fuel rods have been replaced, and which fuel rods were replaced.

In an embodiment of the present disclosure, obtaining, based on the fuel segment information and the nodal information, the nuclear density change information of the three-dimensional fuel assembly via the storage module 140 includes: obtaining nuclear density information and a time period during which the three-dimensional fuel assembly is placed in a spent fuel pool; and calculating, based on the nuclear density information and the time the three-dimensional fuel assembly is placed in the spent fuel pool, the nuclear density change information through a fourth preset calculation procedure. In detail, when the three-dimensional fuel assembly is placed in the spent fuel pool, various nuclides also undergo nuclear reactions, such as decay reactions. In embodiments of the present disclosure, the history that the three-dimensional fuel assembly is placed in the spent fuel pool is used as a part of storage information. In other words, the burnup calculation program is used to calculate a variation of the nuclear density information based on the nuclear density information generated during the calculation of the assembly burnup-distribution information and information of the time the three-dimensional fuel assembly placed in the spent fuel pool stored in the assembly history information, so as to update the nuclear density information.

In an embodiment of the present disclosure, obtaining, based on the fuel segment information and the nodal information, the assembly rod-replacing information of the three-dimensional fuel assembly via the storage module 140 includes, recording geometric information, a material and a composition of the material of the replaced fuel rod, and poison information when the fuel rod is replaced. In detail, in the actual operation of the reactor, an operation of changing rods often occurs. For example, during the operation of the reactor, fuel rods are often damaged. In this case, a certain fuel rod needs to be replaced to avoid radiation leakage; and sometimes a poison rod is extracted or replaced. Therefore, it is necessary to record information of the fuel rod replaced in the assembly, such as the geometric information, the material and the composition of the material of the fuel rod replaced, and the poison information.

In an embodiment of the present disclosure, obtaining, based on the fuel segment information and the nodal information, the assembly archival information of the three-dimensional fuel assembly via the storage module 140 includes assigning an archival number to each three-dimensional fuel assembly based on a preset rule. The three-dimensional fuel assembly has a unique archival number storing information of the three-dimensional fuel assembly.

In an embodiment of the present disclosure, obtaining, based on the fuel segment information and the nodal information, the assembly numbering information of the three-dimensional fuel assembly via the storage module includes, numbering the three-dimensional fuel assembly during a manufacturing process of the three-dimensional fuel assembly. The number is, for example, stored in the storage file of the three-dimensional assembly information to facilitate a user to connect a virtual assembly to a physical assembly.

In an embodiment of the present disclosure, after obtaining all the above three-dimensional assembly information, for example, after all the above three-dimensional assembly information is stored in the storage file of the three-dimensional assembly information, three-dimensional assembly information corresponding to different three-dimensional fuel assemblies is formed.

In an embodiment of the present disclosure, as illustrated in FIG. 8, the system 100 includes, for example, an information query module 150. The information query module 150 is configured to read, based on a three-dimensional assembly information query instruction, three-dimensional assembly information of a three-dimensional fuel assembly to be queried from the three-dimensional assembly information stored. In detail, for example, when three-dimensional assembly information of a specified three-dimensional fuel assembly needs to be queried, it is only needed to input an instruction related to querying the three-dimensional assembly information of the specified three-dimensional fuel assembly to read the three-dimensional assembly information of the specified three-dimensional fuel assembly from the storage file of the three-dimensional assembly information, thereby greatly facilitating the user. The storage file of the three-dimensional assembly information stores the three-dimensional assembly information of all three-dimensional fuel assemblies.

In an embodiment of the present disclosure, as illustrated in FIG. 8, the system 100 includes, for example, an information updating module 160. The information updating module 160 is configured to detect whether the three-dimensional assembly information has changed, and in response to a change of the three-dimensional assembly information, to update the three-dimensional assembly information. In detail, when three-dimensional assembly information of a certain three-dimensional fuel assembly in the stored three-dimensional assembly information changes (such as a nuclide information change, a geometric change, an arrangement change, etc.), the changed three-dimensional assembly information is used to replace the three-dimensional assembly information before the change to update the three-dimensional assembly information of the three-dimensional fuel assembly, and the updated three-dimensional assembly information is stored, thereby realizing information updates of the storage file of the three-dimensional assembly information.

It should be noted that specific implementations of the tracking system for the three-dimensional assembly information of the reactor according to embodiments of the present disclosure are similar to specific implementations of the method for tracking the three-dimensional assembly information of the reactor according to embodiments of the present disclosure. Details of the system may be referred to the description of the method, and for brevity, repeated description is omitted herein

In summary, with the tracking system for the three-dimensional assembly information of the reactor according to embodiments of the present disclosure, three-dimensional modeling is performed on the three-dimensional fuel assembly in the reactor, and the three-dimensional fuel assembly model is divided into the plurality of nodes in the axial direction. The fuel segment information of the fuel segments and the nodal information of the plurality of nodes in the axial direction of the three-dimensional fuel assembly are calculated. The three-dimensional assembly information of the three-dimensional fuel assembly is obtained based on the fuel segment information and the nodal information. That is, the system takes into account the information such as the depletion history of the three-dimensional fuel assembly in the core, and may perform accurate three-dimensional tracking on information of each three-dimensional fuel assembly in the reactor, thereby enhancing the convenience in the design process of the reactor, reducing influences of human factors in the design process, and improving the design accuracy and reliability of the reactor.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples.

Although embodiments of present disclosure have been shown and described above, it should be understood by those skilled in the art that changes, alternatives, and modifications can be made to the embodiments without departing from scope of the present disclosure. The scope of the present disclosure is limited by the attached claims.

## Claims

1. A method for tracking three-dimensional assembly information of a reactor, comprising:

modeling (S1) a three-dimensional fuel assembly in the reactor to obtain a three-dimensional fuel assembly model;

dividing (S2) the three-dimensional fuel assembly model into a plurality of nodes in an axial direction of the three-dimensional fuel assembly, based on an arrangement of fuel segments in the axial direction;

calculating (S3) fuel segment information of all the fuel segments and nodal information of the plurality of nodes in the axial direction of the three-dimensional fuel assembly; and

obtaining (S4) the three-dimensional assembly information of the three-dimensional fuel assembly based on the fuel segment information and the nodal information, and storing the three-dimensional assembly information **characterised in that**

the three-dimensional assembly information comprises: parameters of the fuel segments, geometric information and cell configuration information of the fuel segments, arrangement information of the fuel segments, assembly burnup-distribution information, assembly history information, nuclear density change information, assembly rod-replacing information, assembly archival information and assembly numbering information,

wherein obtaining the parameters of the fuel segments in the three-dimensional fuel assembly based on the fuel segment information and the nodal information comprises:

performing calculation for resonance and neutron transport of the fuel segments through a third preset calculation procedure, to obtain few-group cross-section parameters at different burnup depths and cross-section correction parameters for each fuel segment, and nuclear density distribution information in said fuel segment,

wherein, the method further comprising: changing a state of the fuel segment at different burnup depths, and performing calculations for resonance and neutron transport of the fuel segment in different states to obtain the few-group cross-section parameters in different states,

wherein changing the state of the fuel segment comprises:

changing a water density, a fuel temperature and a boron concentration of the fuel segment,

wherein the geometric information and the cell configuration information of the fuel segments comprises: arrangement rules, geometric dimensions, dimensions of water gaps, geometric dimensions of the three-dimensional fuel assembly, and geometric dimensions of spacer grids for the fuel rods, burnable poison rods, wiring conduits and measurement tubes in the fuel segment,

wherein the arrangement information of the fuel segments indicates an arrangement of the fuel segments in the three-dimensional fuel assembly in a sequence from bottom to top,

wherein obtaining the assembly burnup-distribution information of the three-dimensional fuel assembly based on the fuel segment information and the nodal information, comprises:

obtaining a burnup depth of each fuel segment in the three-dimensional fuel assembly;

obtaining a burnup depth of cells of each fuel segment in the three-dimensional fuel assembly;

obtaining the assembly burnup-distribution information of the three-dimensional fuel assembly based on the burnup depths of all fuel segments; and

recording nuclear density information of critical nuclides of the three-dimensional fuel assembly,

wherein the assembly history information comprises: a burnup process, a refueling cycle, and a poison treatment process that the three-dimensional fuel assembly has undergone, a time period during which the three-dimensional fuel assembly is placed in a spent fuel pool, damage information of the three-dimensional fuel assembly, and replacement information of the fuel rods,

wherein obtaining the nuclear density change information of the three-dimensional fuel assembly based on the fuel segment information and the nodal information, comprises:

obtaining the nuclear density information and a time period during which the three-dimensional fuel assembly is placed in a spent fuel pool; and
calculating the nuclear density change information through a fourth preset calculation procedure, based on the nuclear density information and the time period during which the three-dimensional fuel assembly is placed in the spent fuel pool,

wherein obtaining the assembly rod-replacing information of the three-dimensional fuel assembly based on the fuel segment information and the nodal information, comprises:
recording geometric information, a material and a composition of the material of the replaced fuel rod, and poison information when the fuel rod is replaced,
wherein obtaining the assembly archival information of the three-dimensional fuel assembly based on the fuel segment information and the nodal information, comprises:
assigning an archival number to each three-dimensional fuel assembly based on a preset rule, each three-dimensional fuel assembly having a unique archival number for storing information about said three-dimensional fuel assembly,
wherein, obtaining the assembly numbering information of the three-dimensional fuel assembly based on the fuel segment information and the nodal information, comprises:
numbering the three-dimensional fuel assembly during a manufacturing process of the three-dimensional fuel assembly.

2. The method of claim 1, further comprising:

inputting a three-dimensional assembly information query instruction; and
reading the three-dimensional assembly information of the three-dimensional fuel assembly to be queried from all the three-dimensional assembly information stored, based on the three-dimensional assembly information query instruction.

3. The method of claim 1, further comprising:

detecting whether the three-dimensional assembly information has changed; and
in response to a change of the three-dimensional assembly information, updating the three-dimensional assembly information.

4. The method of claim 1, wherein modeling the three-dimensional fuel assembly in the reactor further comprises:

obtaining fuel rod modeling information, and modeling fuel rods in the three-dimensional fuel assembly based on the fuel rod modeling information to obtain a fuel;
rod model, the fuel rod modeling information comprising: geometric dimensions of clad, geometric dimensions of a pellet, geometric dimensions of a gap of respective fuel rod, a pitch of fuel rods, a thickness of a water gap, a material and a composition of the material in each region;
obtaining guide tube modeling information, and modeling a guide tube in the three-dimensional fuel assembly based on the guide tube modeling information to obtain a guide tube model, the guide tube modeling information comprising: geometric dimensions, a material and a composition of the material of the guide tube;
obtaining measurement tube modeling information, and modeling a measurement tube in the three-dimensional fuel assembly based on the measurement tube modeling information to obtain a measurement tube model, the measurement tube modeling information comprising: geometric dimensions, a material and a composition of the material of the measurement tube;
obtaining grid modeling information, and modeling a grid in the three-dimensional fuel assembly based on the grid modeling information to obtain a grid model, the grid modeling information comprising: geometric dimensions, a material and a composition of the material of the grid;
obtaining arrangement information of the fuel rod, the guide tube, the measurement tube and the grid in a radial direction of the three-dimensional fuel assembly, and performing a radial arrangement on the fuel rod model, the guide tube model, the measurement tube model and the grid model based on the arrangement information;
obtaining reflector modeling information, and modeling a reflector of the three-dimensional fuel assembly based on the reflector modeling information to obtain a reflector model, the reflector modeling information comprising: geometric dimensions, a material and a composition of the material of the reflector; and

obtaining position information of the reflector and all the fuel segments of the three-dimensional fuel assembly in the axial direction of the three-dimensional fuel assembly, and performing an axial arrangement modeling for the three-dimensional fuel assembly model based on the position information,

wherein obtaining the guide tube modeling information comprises:

determine whether a poison and a control rod are inserted into the guide tube;

wherein in response to the poison and the control rod being inserted into the guide tube, the guide tube modeling information comprises: the poison, and geometric dimensions, a material and a composition of the material of the control rod,

wherein obtaining the measurement tube modeling information comprises:

determine whether a detector is inserted into the measurement tube;

wherein in response to the detector being inserted into the measurement tube, the measurement tube modeling information comprises: geometric dimensions, a material and a composition of the material of the detector,

wherein the grid comprises a positioning grid and a mixing vane grid, and the grid modeling information comprises geometric dimensions, a material and a composition of the material of the positioning grid, and geometric dimensions, a material and a composition of the material of the mixing vane grid.

5. The method of claim 1, wherein calculating the fuel segment information of all the fuel segments and the nodal information of the plurality of nodes in the axial direction of the three-dimensional fuel assembly, comprises:

traversing each fuel segment of the three-dimensional fuel assembly and calculating nuclide information and cross-section information at different burnup points for said fuel segment through a first preset calculation procedure; and calculating nuclide information and burnup information in each of the nodes through a second preset calculation procedure.

6. A system (100) for tracking three-dimensional assembly information of a reactor, comprising:

a modeling module (110), configured to model a three-dimensional fuel assembly in the reactor to obtain a three-dimensional fuel assembly model;

a model division module (120), configured to divide the three-dimensional fuel assembly model into a plurality of nodes in an axial direction of the three-dimensional fuel assembly, based on an arrangement of fuel segments in the axial direction;

an information calculation module (130), configured to calculate fuel segment information of all the fuel segments and nodal information of the plurality of nodes in the axial direction of the three-dimensional fuel assembly; and

a storage module (140), configured to obtain the three-dimensional assembly information of the three-dimensional fuel assembly based on the fuel segment information and the nodal information, and to store the three-dimensional assembly information,

**characterised in that**

the three-dimensional assembly information comprises: parameters of the fuel segments, geometric information and cell configuration information of the fuel segments, arrangement information of the fuel segments, assembly burnup-distribution information, assembly history information, nuclear density change information, assembly rod-replacing information, assembly archival information and assembly numbering information,

wherein obtaining, via the storage module, the parameters of the fuel segments in the three-dimensional fuel assembly based on the fuel segment information and the nodal information, comprises:

performing calculation for resonance and neutron transport of the fuel segments through a third preset calculation procedure, to obtain few-group cross-section parameters at different burnup depths and cross-section correction parameters for each fuel segment, and nuclear density distribution information in said fuel segment,

wherein the storage module is configured to change a state of the fuel segment at different burnup depths, and to perform calculations for resonance and neutron transport of the fuel segment in different states to obtain the few-group cross-section parameters in different states,

wherein changing the state of the fuel segment comprises:

changing a water density, a fuel temperature and a boron concentration of the fuel segment,

wherein the geometric information and the cell configuration information of the fuel segments comprises: arrangement rules, geometric dimensions, dimensions of water gaps, geometric dimensions of the three-dimensional fuel assembly, and geometric dimensions of spacer grids for the fuel rods, burnable poison rods, wiring conduits and measurement tubes in the fuel segment,

wherein the arrangement information of the fuel segments indicates an arrangement of the fuel segments in the three-dimensional fuel assembly in a sequence from bottom to top,

wherein obtaining, via the storage module, the assembly burnup-distribution information of the three-dimensional fuel assembly based on the fuel segment information and the nodal information, comprises:

> obtaining a burnup depth of each fuel segment in the three-dimensional fuel assembly;
> obtaining a burnup depth of cells of each fuel segments in the three-dimensional fuel assembly;
> obtaining the assembly burnup-distribution information of the three-dimensional fuel assembly based on the burnup depths of all fuel segments; and
> recording nuclear density information of critical nuclides in the three-dimensional fuel assembly,

wherein the assembly history information comprises: a burnup process, a refueling cycle, and a poison treatment process that the three-dimensional fuel assembly has undergone, a time period during which the three-dimensional fuel assembly is placed in a spent fuel pool, damage information of the three-dimensional fuel assembly, and replacement information of the fuel rods,

wherein obtaining, via the storage module, the nuclear density change information of the three-dimensional fuel assembly based on the fuel segment information and the nodal information, comprises:

> obtaining the nuclear density information and a time period during which the three-dimensional fuel assembly is placed in a spent fuel pool; and
> calculating the nuclear density change information through the fourth preset calculation procedure, based on the nuclear density information and the time period during which the three-dimensional fuel assembly is placed in the spent fuel pool,

wherein obtaining, via the storage module, the assembly rod-replacing information of the three-dimensional fuel assembly based on the fuel segment information and the nodal information, comprises:

recording geometric information, a material and a composition of the material of the replaced fuel rod, and poison information when the fuel rod is replaced,

wherein obtaining, via the storage module, the assembly archival information of the three-dimensional fuel assembly based on the fuel segment information and the nodal information, comprises:

assigning an archival number to each three-dimensional fuel assembly based on a preset rule, each three-dimensional fuel assembly having a unique archival number for storing information about said three-dimensional fuel assembly,

wherein obtaining, via the storage module, the assembly numbering information of the three-dimensional fuel assembly based on the fuel segment information and the nodal information, comprises:

numbering the three-dimensional fuel assembly during a manufacturing process of the three-dimensional fuel assembly.

7. The system of claim 6, further comprising:
an information query module (150), configured to read the three-dimensional assembly information of the three-dimensional fuel assembly to be queried from all the three-dimensional assembly information stored, based on a three-dimensional assembly information query instruction.

8. The system of claim 6, further comprising:
an information updating module (160), configured to detect whether the three-dimensional assembly information has changed, and in response to a change of the three-dimensional assembly information, to update the three-dimensional assembly information.

9. The system of claims 6, wherein the modeling module comprises:

> a fuel rod modeling module (111), configured to obtain fuel rod modeling information, and to model fuel rods in the three-dimensional fuel assembly based on the fuel rod modeling information to obtain a fuel rod model, the fuel rod modeling information comprising: geometric dimensions of clad, geometric dimensions of a pellet, and geometric dimensions of an gap of respective fuel rod, pitch of adjacent fuel rods, a thickness of a water gap, a material and a composition of the material in each region;
> a guide tube modeling module (112), configured to obtain guide tube modeling information, and to model a guide tube in the three-dimensional fuel assembly based on the guide tube modeling information to obtain a guide tube model, the guide tube modeling information comprising: geometric dimensions, a material and a composition of the material of the guide tube;
a measurement tube modeling module (113), configured to obtain measurement tube modeling information, and to model a measurement tube in the three-dimensional fuel assembly based on the measurement tube modeling information to obtain a measurement tube model, the measurement tube modeling information comprising: geometric dimensions, a material and a composition of the material of the measurement tube;
a grid modeling module (114), configured to obtain grid modeling information, and to model a grid in the three-dimensional fuel assembly based on the grid modeling information to obtain a grid model, the grid modeling information comprising: geometric dimensions, a material and a composition of the material of the grid;
a radial modeling module (115), configured to obtain arrangement information of the fuel rods, the guide tube, the measurement tube and the grid in a radial direction of the three-dimensional fuel assembly, and to perform a radial arrangement on the fuel rod model, the guide tube model, the measurement tube model and the grid model based on the arrangement information;
a reflector modeling module (116), configured to obtain reflector modeling information, and to model a reflector of the three-dimensional fuel assembly based on the reflector modeling information to obtain a reflector model, the reflector modeling information comprising: geometric dimensions, a material and a composition of the material of the reflector; and
an axial modeling module (117), configured to obtain position information of the reflector and all the fuel segments of the three-dimensional fuel assembly in the axial direction of the three-dimensional fuel assembly, and to perform an axial arrangement modeling for the three-dimensional fuel assembly model based on the position information,
wherein the guide tube modeling module is configured to:
determine whether a poison and a control rod are inserted into the guide tube;
wherein when the poison and the control rod is inserted into the guide tube, the guide tube modeling information comprises: the poison, and geometric dimensions, a material and a composition of the material of the control rod,
wherein the measurement tube modeling module is further configured to:
determine whether a detector is inserted into the measurement tube;
wherein when the detector is inserted into the measurement tube, the measurement tube modeling information comprises: geometric dimensions, a material and a composition of the material of the detector,
wherein the grid comprises a positioning grid and a mixing vane grid, and the grid modeling information comprises geometric dimensions, a material and a composition of the material of the positioning grid, and geometric dimensions, a material and a composition of the material of the mixing vane grid.

10. The system of claim 6, wherein calculating, via the information calculation module, the fuel segment information of all the fuel segments and the nodal information of the plurality of nodes in the axial direction of the three-dimensional fuel assembly, comprises:

traversing each fuel segment of the three-dimensional fuel assembly and calculating nuclide information and cross-section information at different burnup points for said fuel segment through a first preset calculation procedure; and calculating nuclide information and burnup information in each of the nodes through a second preset calculation procedure.

11. A non-volatile computer storage medium having one or more programs stored thereon, wherein when the one or more programs are executed by an apparatus, the apparatus is configured to implement the method for tracking the three-dimensional assembly information of the reactor according to any one of claims 1 to 5.

**Patentansprüche**

1. Verfahren zur Verfolgung von 3D-Element-Informationen eines Reaktors, umfassend:

Modellieren (S1) eines dreidimensionalen Brennelements in dem Reaktor zum Erhalten eines dreidimensionalen Brennelementmodells;
Unterteilen (S2) des dreidimensionalen Brennelementmodells in eine Vielzahl von Knoten in einer axialen Richtung des dreidimensionalen Brennelements auf Basis einer Anordnung von Brennstoffsegmenten in der axialen Richtung;
Berechnen (S3) von Brennstoffsegmentinformationen aller Brennstoffsegmente und Knoteninformationen der Vielzahl von Knoten in der axialen Richtung des dreidimensionalen Brennelements; und
Erhalten (S4) der 3D-Element-Informationen des dreidimensionalen Brennelements auf Basis der Brennstoffsegmentinformationen und der Knoteninformationen und Speichern der 3D-Element-Informationen,

**dadurch gekennzeichnet,**
**dass** die 3D-Element-Informationen Folgendes umfassen: Parameter der Brennstoffsegmente, geometrische Informationen und Zellenkonfigurationsinformationen der Brennstoffsegmente, Anordnungsinformationen der Brennstoffsegmente, Elementsabbrandverteilungsinformationen, Elementshistorieninformationen, Kerndichteveränderungsinformationen, Elementsstabaustauschinformationen, Elementsarchivinformationen und Elementsnummerierungsinformationen,
wobei das Erhalten der Parameter der Brennstoffsegmente in dem dreidimensionalen Brennelement auf Basis der Brennstoffsegmentinformationen und der Knoteninformationen Folgendes umfasst:

Durchführen einer Berechnung für eine Resonanz und einen Neutronentransport der Brennstoffsegmente durch ein drittes vorbestimmtes Berechnungsverfahren zum Erhalten von Weniggruppen-Querschnittsparametern in unterschiedlichen Abbrandtiefen und Querschnittskorrekturparametern für jedes Brennstoffsegment und Kerndichteverteilungsinformationen in diesem Brennstoffsegment,
wobei das Verfahren des Weiteren Folgendes umfasst: Verändern eines Zustands des Brennstoffsegments in unterschiedlichen Abbrandtiefen und Durchführen von Berechnungen für die Resonanz und den Neutronentransport des Brennstoffsegments in unterschiedlichen Zuständen zum Erhalten der Weniggruppen-Querschnittsparameter in unterschiedlichen Zuständen,
wobei das Verändern des Zustands des Brennstoffsegments Folgendes umfasst:

Verändern einer Wasserdichte, einer Brennstofftemperatur und einer Borkonzentration des Brennstoffsegments,
wobei die geometrischen Informationen und die Zellkonfigurationsinformationen der Brennstoffsegmente Folgendes umfassen: Anordnungsregeln, geometrische Maße, Maße von Wasserspalten, geometrische Maße des dreidimensionalen Brennelements und geometrische Maße von Abstandshaltergittern für die Brennstäbe,
Stäben mit abbrennbarem Gift, Elektroinstallationsrohren und Messrohren in dem Brennstoffsegment,
wobei die Anordnungsinformationen der Brennstoffsegmente eine Anordnung der Brennstoffsegmente in dem dreidimensionalen Brennelement in einer Reihenfolge von unten nach oben angeben,
wobei das Erhalten der Elementsabbrandverteilungsinformationen des dreidimensionalen Brennelements auf Basis der Brennstoffsegmentinformationen und der Knoteninformationen Folgendes umfasst:

Erhalten einer Abbrandtiefe jedes Brennstoffsegments in dem dreidimensionalen Brennelement;
Erhalten einer Abbrandtiefe von Zellen jedes Brennstoffsegments in dem dreidimensionalen Brennelement;
Erhalten der Elementsabbrandverteilungsinformationen des dreidimensionalen Brennelements auf Basis der Abbrandtiefen aller Brennstoffsegmente; und
Aufzeichnen von Kerndichteinformationen kritischer Nuklide des dreidimensionalen Brennelements,
wobei die Elementshistorieninformationen Folgendes umfassen: einen Abbrandprozess, einen Brennelementwechselzyklus und einen Giftbehandlungsprozess, den das dreidimensionale Brennelement durchlaufen hat, einen Zeitraum, für den das dreidimensionale Brennelement in einem Abklingbecken platziert wird, Schadensinformationen des dreidimensionalen Brennelements und Austauschinformationen der Brennstäbe,
wobei das Erhalten der Kerndichteveränderungsinformationen des dreidimensionalen Brennelements auf Basis der Brennstoffsegmentinformationen und der Knoteninformationen Folgendes umfasst:

Erhalten der Kerndichteinformationen und eines Zeitraums, für den das dreidimensionale Brennelement in einem Abklingbecken platziert wird; und
Berechnen der Kerndichteveränderungsinformationen durch ein viertes vorbestimmtes Berechnungsverfahren auf Basis der Kerndichteinformationen und des Zeitraums, für den das dreidimensionale Brennelement in dem Abklingbecken platziert wird, wobei das Erhalten der Elementsstabaustauschinformationen des dreidimensionalen Brennelements auf Basis der Brennstoffsegmentinformationen und der Knoteninformationen Folgendes umfasst:

Aufzeichnen geometrischer Informationen, eines Materials und einer Zusammensetzung des Materials des ausgetauschten Brennstabs und von Giftinformationen bei Austausch des Brennstabs, wobei das Erhalten der Elementsarchivinformationen des dreidimensionalen Brennelements auf Basis der Brennstoffsegmentinformationen und der Knoteninformationen Folgendes umfasst:

Zuordnen einer Archivnummer zu jedem dreidimensionalen Brennelement auf Basis einer vorbestimmten Regel, wobei jedes dreidimensionale Brennelement eine einzigartige Archivnummer zum Speichern von Informationen zu dem dreidimensionalen Brennelement aufweist, wobei das Erhalten der Elementsnummerierungsinformationen des dreidimensionalen Brennelements auf Basis der Brennstoffsegmentinformationen und der Knoteninformationen Folgendes umfasst:
Nummerieren des dreidimensionalen Brennelements im Zuge eines Herstellungsprozesses des dreidimensionalen Brennelements.

2. Verfahren nach Anspruch 1, des Weiteren umfassend:

Eingeben eines Befehls zur Abfrage von 3D-Element-Informationen; und Auslesen der 3D-Element-Informationen des dreidimensionalen Brennelements, die auf Basis des Befehls zur Abfrage von 3D-Element-Informationen aus allen gespeicherten 3D-Element-Informationen abzufragen sind.

3. Verfahren nach Anspruch 1, des Weiteren umfassend:

Erkennen, ob sich die 3D-Element-Informationen verändert haben; und Aktualisieren der 3D-Element-Informationen in Reaktion auf eine Veränderung der 3D-Element-Informationen.

4. Verfahren nach Anspruch 1, wobei das Modellieren des dreidimensionalen Brennelements in dem Reaktor des Weiteren Folgendes umfasst:

Erhalten von Brennstabmodellierungsinformationen und Modellieren von Brennstäben in dem dreidimensionalen Brennelement auf Basis der Brennstabmodellierungsinformationen zum Erhalten eines Brennstabmodells; wobei die Brennstabmodellierungsinformationen Folgendes umfassen: geometrische Maße einer Hülse, geometrische Maße eines Pellets, geometrische Maße eines Spalts eines jeweiligen Brennstabs, einen Abstand zwischen Brennstäben, eine Dicke eines Wasserspalts, ein Material und eine Zusammensetzung des Materials in jedem Bereich; Erhalten von Führungsrohrmodellierungsinformationen und Modellieren eines Führungsrohrs in dem dreidimensionalen Brennelement auf Basis der Führungsrohrmodellierungsinformationen zum Erhalten eines Führungsrohrmodells, wobei die Führungsrohrmodellierungsinformationen Folgendes umfassen: geometrische Maße, ein Material und eine Zusammensetzung des Materials des Führungsrohrs; Erhalten von Messrohrmodellierungsinformationen und Modellieren eines Messrohrs in dem dreidimensionalen Brennelement auf Basis der Messrohrmodellierungsinformationen zum Erhalten eines Messrohrmodells, wobei die Messrohrmodellierungsinformationen Folgendes umfassen: geometrische Maße, ein Material und eine Zusammensetzung des Materials des Messrohrs;

Erhalten von Gittermodellierungsinformationen und Modellieren eines Gitters in dem dreidimensionalen Brennelement auf Basis der Gittermodellierungsinformationen zum Erhalten eines Gittermodells, wobei die Gittermodellierungsinformationen Folgendes umfassen: geometrische Maße, ein Material und eine Zusammensetzung des Materials des Gitters;

Erhalten von Anordnungsinformationen des Brennstabs, des Führungsrohrs, des Messrohrs und des Gitters in einer radialen Richtung des dreidimensionalen Brennelements und Durchführen einer radialen Anordnung an dem Brennstabmodell, dem Führungsrohrmodell, dem Messrohrmodell und dem Gittermodell auf Basis der Anordnungsinformationen;

Erhalten von Reflektormodellierungsinformationen und Modellieren eines Reflektors des dreidimensionalen Brennelements auf Basis der Reflektormodellierungsinformationen zum Erhalten eines Reflektormodells, wobei die Reflektormodellierungsinformationen Folgendes umfassen: geometrische Maße, ein Material und eine Zusammensetzung des Materials des Reflektors; und

Erhalten von Positionsinformationen des Reflektors und aller Brennstoffsegmente des dreidimensionalen Brennelements in der axialen Richtung des dreidimensionalen Brennelements und Durchführen einer Axialanordnungsmodellierung für das 3D-Brennelement-Modell auf Basis der Positionsinformationen,

wobei das Erhalten der Führungsrohrmodellierungsinformationen Folgendes umfasst:

Bestimmen, ob ein Gift und ein Steuerstab in das Führungsrohr eingeführt sind;

wobei die Führungsrohrmodellierungsinformationen in Reaktion auf die Einführung des Gifts und des Steuerstabs in das Führungsrohr Folgendes umfassen: das Gift und geometrische Maße, ein Material und eine Zusammensetzung des Materials des Steuerstabs,

wobei das Erhalten der Messrohrmodellierungsinformationen Folgendes umfasst Bestimmen, ob ein Detektor in das Messrohr eingeführt ist;

wobei die Messrohrmodellierungsinformationen in Reaktion auf die Einführung des Detektors in das Messrohr Folgendes umfassen: geometrische Maße, ein Material und eine Zusammensetzung des Materials des Detektors,

wobei das Gitter ein Positionierungsgitter und ein Durchmischungsfahnengitter umfasst und die Gittermodellierungsinformationen geometrische Maße, ein Material und eine Zusammensetzung des Materials des Positionierungsgitters und geometrische Maße, ein Material und eine Zusammensetzung des Materials des Durchmischungsfahengitters umfassen.

5. Verfahren nach Anspruch 1, wobei das Berechnen der Brennstoffsegmentinformationen aller Brennstoffsegmente und der Konteninformationen der Vielzahl von Knoten in der axialen Richtung des dreidimensionalen Brennelements Folgendes umfasst:

Durchqueren jedes Brennstoffsegments des dreidimensionalen Brennelements und Berechnen von Nuklidinformationen und Querschnittsinformationen an unterschiedlichen Abbrandpunkten für das Brennstoffsegment durch ein erstes vorbestimmtes Berechnungsverfahren; und

Berechnen von Nuklidinformationen und Abbrandinformationen in jedem der Knoten durch ein zweites vorbestimmtes Berechnungsverfahren.

6. System (100) zur Verfolgung von 3D-Element-Informationen eines Reaktors, umfassend:

ein Modellierungsmodul (110) zur Modellierung eines dreidimensionalen Brennelements in dem Reaktor zum Zweck des Erhaltens eines dreidimensionalen Brennelementmodells;

ein Modellunterteilungsmodul (120) zur Unterteilung des dreidimensionalen Brennelementmodells in eine Vielzahl von Knoten in einer axialen Richtung des dreidimensionalen Brennelements auf Basis einer Anordnung von Brennstoffsegmenten in der axialen Richtung;

ein Informationsberechnungsmodul (130) zur Berechnung von Brennstoffsegmentinformationen aller Brennstoffsegmente und Konteninformationen der Vielzahl von Knoten in der axialen Richtung des dreidimensionalen Brennelements; und

ein Speichermodul (140) zum Erhalten der 3D-Element-Informationen des dreidimensionalen Brennelements auf Basis der Brennstoffsegmentinformationen und der Knoteninformationen und zur Speicherung der 3D-Element-Informationen, **dadurch gekennzeichnet, dass** die 3D-Element-Informationen Folgendes umfassen: Parameter der Brennstoffsegmente, geometrische Informationen und Zellenkonfigurationsinformationen der Brennstoffsegmente, Anordnungsinformationen der Brennstoffsegmente, Elementsabbrandverteilungsinformationen, Elementshistorieninformationen, Kerndichteveränderungsinformationen, Elementsstabaustauschinformationen, Elementsarchivinformationen und Elementsnummerierungsinformationen,

wobei das Erhalten der Parameter der Brennstoffsegmente in dem dreidimensionalen Brennelement auf Basis der Brennstoffsegmentinformationen und der Knoteninformationen durch das Speichermodul Folgendes umfasst:

Durchführung einer Berechnung für eine Resonanz und einen Neutronentransport der Brennstoffsegmente durch ein drittes vorbestimmtes Berechnungsverfahren zum Erhalten von Weniggruppen-Querschnittsparametern in unterschiedlichen Abbrandtiefen und Querschnittskorrekturparametern für jedes Brennstoffsegment und Kerndichteverteilungsinformationen in diesem Brennstoffsegment,

wobei das Speichermodul zur Veränderung eines Zustands des Brennstoffsegments in unterschiedlichen Abbrandtiefen und zur Durchführung von Berechnungen für die Resonanz und den Neutronentransport des Brennstoffsegments in unterschiedlichen Zuständen zum Zweck des Erhaltens der Weniggruppen-Querschnittsparameter in unterschiedlichen Zuständen ausgebildet ist,

wobei die Veränderung des Zustands des Brennstoffsegments Folgendes umfasst Veränderung einer Wasserdichte, einer Brennstofftemperatur und einer Borkonzentration des Brennstoffsegments,

wobei die geometrischen Informationen und die Zellkonfigurationsinformationen der Brennstoffsegmente Folgendes umfassen: Anordnungsregeln, geometrische Maße, Maße von Wasserspalten, geometrische Maße des dreidimensionalen Brennelements und geometrische Maße von Abstandshaltergittern für die Brennstäbe, Stäben mit abbrennbarem Gift, Elektroinstallationsrohren und Messrohren in dem Brennstoffsegment,

wobei die Anordnungsinformationen der Brennstoffsegmente eine Anordnung der Brennstoffsegmente in dem dreidimensionalen Brennelement in einer Reihenfolge von unten nach oben angeben,

wobei das Erhalten der Elementsabbrandverteilungsinformationen des dreidimensionalen Brennelements auf Basis der Brennstoffsegmentinformationen und der Knoteninformationen durch das Speichermodul Folgendes umfasst:

Erhalten einer Abbrandtiefe jedes Brennstoffsegments in dem dreidimensionalen Brennelement;
Erhalten einer Abbrandtiefe von Zellen jedes Brennstoffsegments in dem dreidimensionalen Brennelement;
Erhalten der Elementsabbrandverteilungsinformationen des dreidimensionalen Brennelements auf Basis der Abbrandtiefen aller Brennstoffsegmente; und
Aufzeichnung von Kerndichteinformationen kritischer Nuklide in dem dreidimensionalen Brennelement,

wobei die Elementshistorieninformationen Folgendes umfassen: einen Abbrandprozess, einen Brennelementwechselzyklus und einen Giftbehandlungsprozess, den das dreidimensionale Brennelement durchlaufen hat, einen Zeitraum, für den das dreidimensionale Brennelement in einem Abklingbecken platziert ist, Schadensinformationen des dreidimensionalen Brennelements und Austauschinformationen der Brennstäbe,

wobei das Erhalten der Kerndichteveränderungsinformationen des dreidimensionalen Brennelements auf Basis der Brennstoffsegmentinformationen und der Knoteninformationen durch das Speichermodul Folgendes umfasst:

Erhalten der Kerndichteinformationen und eines Zeitraums, für den das dreidimensionale Brennelement in einem Abklingbecken platziert ist; und
Berechnung der Kerndichteveränderungsinformationen durch das vierte vorbestimmte Berechnungsverfahren auf Basis der Kerndichteinformationen und des Zeitraums, für den das dreidimensionale Brennelement in dem Abklingbecken platziert ist,

wobei das Erhalten der Elementsstabaustauschinformationen des dreidimensionalen Brennelements auf Basis der Brennstoffsegmentinformationen und der Knoteninformationen durch das Speichermodul Folgendes umfasst:

Aufzeichnen geometrischer Informationen, eines Materials und einer Zusammensetzung des Materials des ausgetauschten Brennstabs und von Giftinformationen bei Austausch des Brennstabs, wobei das Erhalten der Elementsarchivinformationen des dreidimensionalen Brennelements auf Basis der Brennstoffsegmentinformationen und der Knoteninformationen durch das Speichermodul Folgendes umfasst:

Zuordnung einer Archivnummer zu jedem dreidimensionalen Brennelement auf Basis einer vorbestimmten Regel, wobei jedes dreidimensionale Brennelement eine einzigartige Archivnummer zum Speichern von Informationen zu dem dreidimensionalen Brennelement aufweist, wobei das Erhalten der Elementsnummerierungsinformationen des dreidimensionalen Brennelements auf Basis der Brennstoffsegmentinformationen und der Knoteninformationen durch das Speichermodul Folgendes umfasst: Nummerierung des dreidimensionalen Brennelements im Zuge eines Herstellungsprozesses des dreidimensionalen Brennelements.

7. System nach Anspruch 6, des Weiteren umfassend: ein Informationsabfragemodul (150) zum Auslesen der 3D-Element-Informationen des dreidimensionalen Brennelements, die auf Basis eines Befehls zur Abfrage von 3D-Element-Informationen aus allen gespeicherten 3D-Element-Informationen abzufragen sind.

8. System nach Anspruch 6, des Weiteren umfassend: ein Informationsaktualisierungsmodul (160) zur Erkennung, ob sich die 3D-Element-Informationen verändert haben, und zur Aktualisierung der 3D-Element-Informationen in Reaktion auf eine Veränderung der 3D-Element-Informationen.

9. System nach Anspruch 6, wobei das Modellierungsmodul Folgendes umfasst ein Brennstabmodellierungsmodul (111) zum Erhalten von Brennstabmodellierungsinformationen und zur Modellierung von Brennstäben in dem dreidimensionalen Brennelement auf Basis der Brennstabmodellierungsinformationen zum Zweck des Erhaltens eines Brennstabmodells, wobei die Brennstabmodellierungsinformationen Folgendes umfassen: geometrische Maße einer Hülse, geometrische Maße eines Pellets und geometrische Maße eines Spalts des jeweiligen Brennstabs, einen Abstand zwischen benachbarten Brennstäben, eine Dicke eines Wasserspalts, ein Material und eine Zusammensetzung des Materials in jedem Bereich;

ein Führungsrohrmodellierungsmodul (112) zum Erhalten von Führungsrohrmodellierungsinformationen und zur Modellierung eines Führungsrohr in dem dreidimensionalen Brennelement auf Basis der Führungsrohrmodellierungsinformationen zum Zweck des Erhaltens eines Führungsrohrmodells, wobei die Führungsrohrmodellierungsinformationen Folgendes umfassen: geometrische Maße, ein Material und eine Zusammensetzung des Materials des Führungsrohrs;
ein Messrohrmodellierungsmodul (113) zum Erhalten von Messrohrmodellierungsinformationen und zur Modellierung eines Messrohrs in dem dreidimensionalen Brennelement auf Basis der Messrohrmodellierungsinformationen zum Zweck des Erhaltens eines Messrohrmodells, wobei die Messrohrmodellierungsinformationen Folgendes umfassen: geometrische Maße, ein Material und eine Zusammensetzung des Materials des Messrohrs;
ein Gittermodellierungsmodul (114) zum Erhalten von Gittermodellierungsinformationen und zur Modellierung eines Gitters in dem dreidimensionalen Brennelement auf Basis der Gittermodellierungsinformationen zum Zweck des Erhaltens eines Gittermodells, wobei die Gittermodellierungsinformationen Folgendes umfassen:

geometrische Maße, ein Material und eine Zusammensetzung des Materials des Gitters;
ein Radialmodellierungsmodul (115) zum Erhalten von Anordnungsinformationen der Brennstäbe, des Führungsrohrs, des Messrohrs und des Gitters in einer radialen Richtung des dreidimensionalen Brennelements und zur Durchführung einer radialen Anordnung an dem Brennstabmodell, dem Führungsrohrmodell, dem Messrohrmodell und dem Gittermodell auf Basis der Anordnungsinformationen;

ein Reflektormodellierungsmodul (116) zum Erhalten von Reflektormodellierungsinformationen und zur Modellierung eines Reflektors des dreidimensionalen Brennelements auf Basis der Reflektormodellierungsinformationen zum Zweck des Erhaltens eines Reflektormodells, wobei die Reflektormodellierungsinformationen Folgendes umfassen: geometrische Maße, ein Material und eine Zusammensetzung des Materials des Reflektors; und

ein Axialmodellierungsmodul (117) zum Erhalten von Positionsinformationen des Reflektors und aller Brennstoffsegmente des dreidimensionalen Brennelements in der axialen Richtung des dreidimensionalen Brennelements und zur Durchführung einer Axialanordnungsmodellierung für das 3D-Brennelement-Modell auf Basis der Positionsinformationen,

wobei das Führungsrohrmodellierungsmodul zu Folgendem ausgebildet ist: Bestimmung, ob ein Gift und ein Steuerstab in das Führungsrohr eingeführt sind; wobei die Führungsrohrmodellierungsinformationen wenn das Gift und der Steuerstab in das Führungsrohr einführt ist Folgendes umfassen: das Gift und geometrische Maße, ein Material und eine Zusammensetzung des Materials des Steuerstabs, wobei das Messrohrmodellierungsmodul des Weiteren zu Folgendem ausgebildet ist:

Bestimmung, ob ein Detektor in das Messrohr eingeführt ist;

wobei die Messrohrmodellierungsinformationen wenn der Detektor in das Messrohr eingeführt ist Folgendes umfassen: geometrische Maße, ein Material und eine Zusammensetzung des Materials des Detektors,

wobei das Gitter ein Positionierungsgitter und ein Durchmischungsfahnengitter umfasst und die Gittermodellierungsinformationen geometrische Maße, ein Material und eine Zusammensetzung des Materials des Positionierungsgitters und geometrische Maße, ein Material und eine Zusammensetzung des Materials des Durchmischungsfahnengitters umfassen.

10. System nach Anspruch 6, wobei die Berechnung der Brennstoffsegmentinformationen aller Brennstoffsegmente und der Konteninformationen der Vielzahl von Knoten in der axialen Richtung des dreidimensionalen Brennelements durch das Informationsberechnungsmodul Folgendes umfasst:

Durchquerung jedes Brennstoffsegments des dreidimensionalen Brennelements und Berechnung von Nuklidinformationen und Querschnittsinformationen an unterschiedlichen Abbrandpunkten für das Brennstoffsegment durch ein erstes vorbestimmtes Berechnungsverfahren; und

Berechnung von Nuklidinformationen und Abbrandinformationen in jedem der Knoten durch ein zweites vorbestimmtes Berechnungsverfahren.

11. Nichtflüchtiges Computerspeichermedium mit einem oder mehreren darauf gespeicherten Programmen, wobei eine Vorrichtung dazu ausgebildet ist, bei Ausführung des einen oder der mehreren Programme durch die Vorrichtung das Verfahren zum Verfolgen der 3D-Element-Informationen des Reaktors nach einem der Ansprüche 1 bis 5 zu implementieren.

## Revendications

1. Procédé de suivi d'informations d'assemblage tridimensionnel d'un réacteur, comprenant :

modeler (S 1) un assemblage combustible tridimensionnel dans le réacteur afin d'obtenir un modèle d'assemblage combustible tridimensionnel ;

diviser (S2) le modèle d'assemblage combustible tridimensionnel en une pluralité de noeuds dans une direction axiale de l'assemblage combustible tridimensionnel sur la base d'un arrangement de segments de combustible dans la direction axiale ; calculer (S3) des informations de segment de combustible de tous les segments de combustible et des informations nodales de la pluralité de noeuds dans la direction axiale de l'assemblage combustible tridimensionnel ; et

obtenir (S4) les informations d'assemblage tridimensionnel de l'assemblage combustible tridimensionnel sur la base des informations de segment de combustible et des informations nodales et stocker les informations d'assemblage tridimensionnel, **caractérisé en ce que** les informations d'assemblage tridimensionnel comprennent : des paramètres des segments de combustible, des informations géométriques et des informations de configuration de cellule des segments de combustible, des informations d'arrangement des segments de combustible, des informations de distribution de combustion d'assemblage, des informations d'historique d'assemblage, des informations de changement de densité nucléaire, des informations de replacement de crayon d'assemblage, des informations archivistiques d'assemblage et des informations de numérotation d'assemblage, dans lequel l'obtention des paramètres des segments de combustible dans l'assemblage combustible tridimensionnel sur la base des informations de segment de combustible et des informations nodales comprend :

effectuer un calcul pour la résonance et le transport neutronique des segments de combustible par un troisième procédé de calcul prédéfini afin d'obtenir des paramètres de section à peu de groupes à des profondeurs de combustion différentes et des paramètres de correction de section pour chaque segment de combustible et des informations de distribution de densité nucléaire dans ledit segment de combustible, dans lequel le procédé comprend en outre : changer un état du segment de combustible à des profondeurs de combustion différentes et effectuer des calculs pour la résonance et le transport neutronique du segment de combustible dans des états différents afin d'obtenir les paramètres de section à peu de groupes dans des états différents, dans lequel le changement de l'état du segment de combustible comprend :

changer une densité d'eau, une température de combustible et une concentration de bore du segment de combustible, dans lequel les informations géométriques et les informations de configuration de cellule des segments de combustible comprennent : des règles d'arrangement, des dimensions géométriques, des dimensions de fentes d'eau, des dimensions géométriques de l'assemblage combustible tridimensionnel et des dimensions géométriques de grilles entretoises pour les crayons de combustible, des crayons de poison consommable, des conduits de câblage et des tubes de mesure dans le segment de combustible, dans lequel les informations d'arrangement des segments de combustible indiquent un arrangement des segments de combustible dans l'assemblage combustible tridimensionnel dans une séquence de bas en haut, dans lequel l'obtention des informations de distribution de combustion d'assemblage de l'assemblage combustible tridimensionnel sur la base des informations de segment de combustible et des informations nodales comprend :

obtenir une profondeur de combustion de chaque segment de combustible dans l'assemblage combustible tridimensionnel ; obtenir une profondeur de combustion de cellules de chaque segment de combustible dans l'assemblage combustible tridimensionnel ; obtenir les informations de distribution de combustion d'assemblage de l'assemblage combustible tridimensionnel sur la base des profondeurs de combustion de tous les segments de combustible ; et enregistrer des informations de densité nucléaire de nucléides critiques de l'assemblage combustible tridimensionnel, dans lequel les informations d'historique d'assemblage comprennent : un processus de combustion, un cycle de rechargement et un processus de traitement de poison que l'assemblage combustible tridimensionnel a subi, une période de temps pendant laquelle l'assemblage combustible tridimensionnel est placé dans une piscine de stockage de combustible, des informations de dommage de l'assemblage combustible tridimensionnel et des informations de replacement des crayons de combustible, dans lequel l'obtention des informations de changement de densité nucléaire de l'assemblage combustible tridimensionnel sur la base des informations de segment de combustible et des informations nodales comprend :

obtenir les informations de densité nucléaire et une période de temps pendant laquelle l'assemblage combustible tridimensionnel est placé dans une piscine de stockage de combustible ; et calculer les informations de changement de densité nucléaire par un quatrième procédé de calcul prédéfini sur la base des informations de densité nucléaire et la période de temps pendant laquelle l'assemblage combustible tridimensionnel est placé dans la piscine de stockage de combustible,

dans lequel l'obtention des informations de replacement de crayon d'assemblage de l'assemblage combustible tridimensionnel sur la base des informations de segment de combustible et des informations nodales comprend :

enregistrer des informations géométriques, un matériau et une composition du matériau du crayon de combustible remplacé et des informations de poison quand le crayon de combustible est remplacé,

dans lequel l'obtention des informations archivistiques d'assemblage de l'assemblage combustible tridimensionnel sur la base des informations de segment de combustible et des informations nodales comprend :

attribuer un numéro archivistique à chaque assemblage combustible tridimensionnel sur la base d'une règle prédéfinie, chaque assemblage combustible tridimensionnel ayant un numéro archivistique unique pour stocker des informations sur ledit assemblage combustible tridimensionnel,

dans lequel l'obtention des informations de numérotation d'assemblage de l'assemblage combustible tridimensionnel sur la base des informations de segment de combustible et des informations nodales comprend :

numéroter l'assemblage combustible tridimensionnel au cours d'un processus de fabrication de l'assemblage combustible tridimensionnel.

**2.** Procédé selon la revendication 1, comprenant en outre :
entrer une instruction de requête d'informations d'assemblage tridimensionnel ; et lire les informations d'assemblage tridimensionnel de l'assemblage combustible tridimensionnel à extraire parmi toutes les informations d'assemblage tridimensionnel stockées sur la base de l'instruction de requête d'informations d'assemblage tridimensionnel.

**3.** Procédé selon la revendication 1, comprenant en outre :

détecter si les informations d'assemblage tridimensionnel ont changé ; et
en réponse à un changement des informations d'assemblage tridimensionnel, mettre à jour les informations d'assemblage tridimensionnel.

**4.** Procédé selon la revendication 1, dans lequel la modélisation de l'assemblage combustible tridimensionnel dans le réacteur comprend en outre :

obtenir des informations de modélisation de crayon de combustible et modeler des crayons de combustible dans l'assemblage combustible tridimensionnel sur la base des informations de modélisation de crayon de combustible afin d'obtenir un modèle de crayon de combustible ; les informations de modélisation de crayon de combustible comprenant : des dimensions géométriques d'une gaine, des dimensions géométriques d'une pastille, des dimensions géométriques d'un écart de crayons de combustible respectifs, une distance entre des crayons de combustible, une largeur d'une fente d'eau, un matériau et une composition du matériau dans chaque région ;
obtenir des informations de modélisation de tube guide et modeler un tube guide dans l'assemblage combustible tridimensionnel sur la base des informations de modélisation de tube guide afin d'obtenir un modèle de tube guide, les informations de modélisation de tube guide comprenant : des dimensions géométriques, un matériau et une composition du matériau du tube guide ;

obtenir des informations de modélisation de tube de mesure et modeler un tube de mesure dans l'assemblage combustible tridimensionnel sur la base des informations de modélisation de tube de mesure afin d'obtenir un modèle de tube de mesure, les informations de modélisation de tube de mesure comprenant : des dimensions géométriques, un matériau et une composition du matériau du tube de mesure ;

obtenir des informations de modélisation de grille et modeler une grille dans l'assemblage combustible tridimensionnel sur la base des informations de modélisation de grille afin d'obtenir un modèle de grille, les informations de modélisation de grille comprenant : des dimensions géométriques, un matériau et une composition du matériau de la grille ;

obtenir des informations d'arrangement du crayon de combustible, du tube guide, du tube de mesure et de la grille dans une direction radiale de l'assemblage combustible tridimensionnel et effectuer un arrangement radial sur le modèle de crayon de combustible, le modèle de tube guide, le modèle de tube de mesure et le modèle de grille sur la base des informations d'arrangement ;

obtenir des informations de modélisation de réflecteur et modeler un réflecteur de l'assemblage combustible tridimensionnel sur la base des informations de modélisation de réflecteur afin d'obtenir un modèle de réflecteur, les informations de modélisation de réflecteur comprenant : des dimensions géométriques, un matériau et une composition du matériau du réflecteur ; et obtenir des informations de position du réflecteur et de tous les segments de combustible de l'assemblage combustible tridimensionnel dans la direction axiale de l'assemblage combustible tridimensionnel et effectuer une modélisation d'arrangement axial pour le modèle d'assemblage combustible tridimensionnel sur la base des informations de position,

dans lequel l'obtention des informations de modélisation de tube guide comprend : déterminer si un poison et une barre de contrôle sont insérés dans le tube guide ; dans lequel, en réponse au fait que le poison et la barre de contrôle sont insérés dans le tube guide, les informations de modélisation de tube guide comprennent : le poison et des dimensions géométriques, un matériau et une composition du matériau de la barre de contrôle,

dans lequel l'obtention des informations de modélisation de tube de mesure comprend :

déterminer si un détecteur est inséré dans le tube de mesure ;

dans lequel, en réponse au fait que le détecteur est inséré dans le tube de mesure, les informations de modélisation de tube de mesure comprennent : des dimensions géométriques, un matériau et une composition du matériau du détecteur,

dans lequel la grille comprend une grille de positionnement et une grille à ailettes de mélange et les informations de modélisation de grille comprend des dimensions géométriques, un matériau et une composition du matériau de la grille de positionnement et des dimensions géométriques, un matériau et une composition du matériau de la grille à ailettes de mélange.

5. Procédé selon la revendication 1, dans lequel le calcul des informations de segment de combustible de tous les segments de combustible et des informations nodales de la pluralité de noeuds dans la direction axiale de l'assemblage combustible tridimensionnel comprend :

traverser chaque segment de combustible de l'assemblage combustible tridimensionnel et calculer des informations de nucléide et des informations de section à des points de combustion différents pour ledit segment de combustible par un premier procédé de calcul prédéfini ; et

calculer des informations de nucléide et des informations de combustion dans chacun des noeuds par un deuxième procédé de calcul prédéfini.

6. Système (100) de suivi d'informations d'assemblage tridimensionnel d'un réacteur, comprenant :

un module de modélisation (110), configuré pour modeler un assemblage combustible tridimensionnel dans le réacteur afin d'obtenir un modèle d'assemblage combustible tridimensionnel ;

un module de division de modèle (120), configuré pour diviser le modèle d'assemblage combustible tridimensionnel en une pluralité de noeuds dans une direction axiale de l'assemblage combustible tridimensionnel sur la base d'un arrangement de segments de combustible dans la direction axiale ;

un module de calcul d'informations (130), configuré pour calculer des informations de segment de combustible de tous les segments de combustible et des informations nodales de la pluralité de noeuds dans la direction axiale de l'assemblage combustible tridimensionnel ; et

un module de stockage (140), configuré pour obtenir les informations d'assemblage tridimensionnel de l'assemblage combustible tridimensionnel sur la base des informations de segment de combustible et des informations nodales et stocker les informations d'assemblage tridimensionnel,

dans lequel les informations d'assemblage tridimensionnel comprennent : des paramètres des segments de combustible, des informations géométriques et des informations de configuration de cellule des segments de combustible, des informations d'arrangement des segments de combustible, des informations de distribution de combustion d'assemblage, des informations d'historique d'assemblage, des informations de changement de densité nucléaire, des informations de replacement de crayon d'assemblage, des informations archivistiques d'assemblage et des informations de numérotation d'assemblage,

dans lequel l'obtention des paramètres des segments de combustible dans l'assemblage combustible tridimensionnel sur la base des informations de segment de combustible et des informations nodales par le module de stockage comprend :

> effectuer un calcul pour la résonance et le transport neutronique des segments de combustible par un troisième procédé de calcul prédéfini afin d'obtenir des paramètres de section à peu de groupes à des profondeurs de combustion différentes et des paramètres de correction de section pour chaque segment de combustible et des informations de distribution de densité nucléaire dans ledit segment de combustible, dans lequel le module de stockage est configuré pour changer un état du segment de combustible à des profondeurs de combustion différentes et effectuer des calculs pour la résonance et le transport neutronique du segment de combustible dans des états différents afin d'obtenir les paramètres de section à peu de groupes dans des états différents,

dans lequel le changement de l'état du segment de combustible comprend :

> changer une densité d'eau, une température de combustible et une concentration de bore du segment de combustible,

dans lequel les informations géométriques et les informations de configuration de cellule des segments de combustible comprennent : des règles d'arrangement, des dimensions géométriques, des dimensions de fentes d'eau, des dimensions géométriques de l'assemblage combustible tridimensionnel et des dimensions géométriques de grilles entretoises pour les crayons de combustible, des crayons de poison consommable, des conduits de câblage et des tubes de mesure dans le segment de combustible,

dans lequel les informations d'arrangement des segments de combustible indiquent un arrangement des segments de combustible dans l'assemblage combustible tridimensionnel dans une séquence de bas en haut,

dans lequel l'obtention des informations de distribution de combustion d'assemblage de l'assemblage combustible tridimensionnel sur la base des informations de segment de combustible et des informations nodales par le module de stockage comprend :

> obtenir une profondeur de combustion de chaque segment de combustible dans l'assemblage combustible tridimensionnel ;
> obtenir une profondeur de combustion de cellules de chaque segments de combustible dans l'assemblage combustible tridimensionnel ;
> obtenir les informations de distribution de combustion d'assemblage de l'assemblage combustible tridimensionnel sur la base des profondeurs de combustion de tous les segments de combustible ; et
> enregistrer des informations de densité nucléaire de nucléides critiques dans l'assemblage combustible tridimensionnel,

dans lequel les informations d'historique d'assemblage comprennent : un processus de combustion, un cycle de rechargement et un processus de traitement de poison que l'assemblage combustible tridimensionnel a subi, une période de temps pendant laquelle l'assemblage combustible tridimensionnel est placé dans une piscine de stockage de combustible, des informations de dommage de l'assemblage combustible tridimensionnel et des informations de replacement des crayons de combustible,

dans lequel l'obtention des informations de changement de densité nucléaire de l'assemblage combustible tridimensionnel sur la base des informations de segment de combustible et des informations nodales par le module de stockage comprend :

obtenir les informations de densité nucléaire et une période de temps pendant laquelle l'assemblage combustible tridimensionnel est placé dans une piscine de stockage de combustible ; et

calculer les informations de changement de densité nucléaire par le quatrième procédé de calcul prédéfini sur la base des informations de densité nucléaire et la période de temps pendant laquelle l'assemblage combustible tridimensionnel est placé dans la piscine de stockage de combustible,

dans lequel l'obtention des informations de replacement de crayon d'assemblage de l'assemblage combustible tridimensionnel sur la base des informations de segment de combustible et des informations nodales par le module de stockage comprend :

enregistrer des informations géométriques, un matériau et une composition du matériau du crayon de combustible remplacé et des informations de poison quand le crayon de combustible est remplacé,

dans lequel l'obtention des informations archivistiques d'assemblage de l'assemblage combustible tridimensionnel sur la base des informations de segment de combustible et des informations nodales par le module de stockage comprend :

attribuer un numéro archivistique à chaque assemblage combustible tridimensionnel sur la base d'une règle prédéfinie, chaque assemblage combustible tridimensionnel ayant un numéro archivistique unique pour stocker des informations sur ledit assemblage combustible tridimensionnel,

dans lequel l'obtention des informations de numérotation d'assemblage de l'assemblage combustible tridimensionnel sur la base des informations de segment de combustible et des informations nodales par le module de stockage comprend :

numéroter l'assemblage combustible tridimensionnel au cours d'un processus de fabrication de l'assemblage combustible tridimensionnel.

7. Système selon la revendication 6, comprenant en outre :
un module de requête d'informations (150), configuré pour lire les informations d'assemblage tridimensionnel de l'assemblage combustible tridimensionnel à extraire parmi toutes les informations d'assemblage tridimensionnel stockées sur la base d'une instruction de requête d'informations d'assemblage tridimensionnel.

8. Système selon la revendication 6, comprenant en outre :
un module de mise à jour d'informations (160), configuré pour détecter si les informations d'assemblage tridimensionnel ont changé et, en réponse à un changement des informations d'assemblage tridimensionnel, mettre à jour les informations d'assemblage tridimensionnel.

9. Système selon la revendication 6, dans lequel le module de modélisation comprend :

un module de modélisation de crayon de combustible (111), configuré pour obtenir des informations de modélisation de crayon de combustible et modeler des crayons de combustible dans l'assemblage combustible tridimensionnel sur la base des informations de modélisation de crayon de combustible afin d'obtenir un modèle de crayon de combustible, les informations de modélisation de crayon de combustible comprenant : des dimensions géométriques d'une gaine, des dimensions géométriques d'une pastille et des dimensions géométriques d'un écart de crayons de combustible respectifs, une distance entre des crayons de combustible adjacents, une largeur d'une fente d'eau, un matériau et une composition du matériau dans chaque région ;

un module de modélisation de tube guide (112), configuré pour obtenir des informations de modélisation de tube guide et modeler un tube guide dans l'assemblage combustible tridimensionnel sur la base des informations de modélisation de tube guide afin d'obtenir un modèle de tube guide, les informations de modélisation de tube guide comprenant : des dimensions géométriques, un matériau et une composition du matériau du tube guide ;

un module de modélisation de tube de mesure (113), configuré pour obtenir des informations de modélisation de tube de mesure et modeler un tube de mesure dans l'assemblage combustible tridimensionnel sur la base des informations de modélisation de tube de mesure afin d'obtenir un modèle de tube de mesure, les informations de modélisation de tube de mesure comprenant : des dimensions géométriques, un matériau et une composition du matériau du tube de mesure ;

module de modélisation de grille (114), configuré pour obtenir des informations de modélisation de grille et modeler une grille dans l'assemblage combustible tridimensionnel sur la base des informations de modélisation de grille afin d'obtenir un modèle de grille, les informations de modélisation de grille comprenant : des dimensions géométriques, un matériau et une composition du matériau de la grille ; un module de modélisation radial (115), configuré pour obtenir des informations d'arrangement des crayons de combustible, du tube guide, du tube de mesure et de la grille dans une direction radiale de l'assemblage combustible tridimensionnel et effectuer un arrangement radial sur le modèle de crayon de combustible, le modèle de tube guide, le modèle de tube de mesure et le modèle de grille sur la base des informations d'arrangement ;

un module de modélisation de réflecteur (116), configuré pour obtenir des informations de modélisation de réflecteur et modeler un réflecteur de l'assemblage combustible tridimensionnel sur la base des informations de modélisation de réflecteur afin d'obtenir un modèle de réflecteur, les informations de modélisation de réflecteur comprenant : des dimensions géométriques, un matériau et une composition du matériau du réflecteur ; et

un module de modélisation axial (117), configuré pour obtenir des informations de position du réflecteur et de tous les segments de combustible de l'assemblage combustible tridimensionnel dans la direction axiale de l'assemblage combustible tridimensionnel et effectuer une modélisation d'arrangement axial pour le modèle d'assemblage combustible tridimensionnel sur la base des informations de position, dans lequel le module de modélisation de tube guide est configuré pour :

déterminer si un poison et une barre de contrôle sont insérés dans le tube guide ; dans lequel, lorsque le poison et la barre de contrôle sont insérés dans le tube guide, les informations de modélisation de tube guide comprennent : le poison et des dimensions géométriques, un matériau et une composition du matériau de la barre de contrôle, dans lequel le module de modélisation de tube de mesure est configuré en outre pour :

déterminer si un détecteur est inséré dans le tube de mesure ; dans lequel, lorsque le détecteur est inséré dans le tube de mesure, les informations de modélisation de tube de mesure comprennent : des dimensions géométriques, un matériau et une composition du matériau du détecteur, dans lequel la grille comprend une grille de positionnement et une grille à ailettes de mélange et les informations de modélisation de grille comprennent des dimensions géométriques, un matériau et une composition du matériau de la grille de positionnement et des dimensions géométriques, un matériau et une composition du matériau de la grille à ailettes de mélange.

10. Système selon la revendication 6, dans lequel le calcul des informations de segment de combustible de tous les segments de combustible et des informations nodales de la pluralité de noeuds dans la direction axiale de l'assemblage combustible tridimensionnel par le module de calcul d'informations comprend :

traverser chaque segment de combustible de l'assemblage combustible tridimensionnel et calculer des informations de nucléide et des informations de section à des points de combustion différents pour ledit segment de combustible par un premier procédé de calcul prédéfini ; et

calculer des informations de nucléide et des informations de combustion dans chacun des noeuds par un deuxième procédé de calcul prédéfini.

11. Support de stockage d'ordinateur non volatil ayant un ou plusieurs programmes stockés sur celui-ci, dans lequel, quand l'un ou les plusieurs programmes sont exécutés par un appareil, l'appareil est configuré pour implémenter le procédé pour suivre les informations d'assemblage tridimensionnel du réacteur selon l'une quelconque des revendications 1 à 5.

Modeling a three-dimensional fuel assembly in the reactor to obtain a three-dimensional fuel assembly model — S1

Dividing the three-dimensional fuel assembly model into a plurality of nodes in an axial direction of the three-dimensional fuel assembly, based on an arrangement of fuel segments in the axial direction — S2

Calculating fuel segment information of all the fuel segments and nodal information of the plurality of nodes in the axial direction of the three-dimensional fuel assembly — S3

Obtaining the three-dimensional assembly information of the three-dimensional fuel assembly based on the fuel segment information and the nodal information, and storing the three-dimensional assembly information — S4

FIG. 1

FIG. 2

FIG. 3

— Pellet Type 1

— Pellet Type 2

— Pellet Type 3

FIG. 4

FIG. 5

Fuel Assembly $A$

Fuel Segment: $G_m^1$ 1

Fuel Segment: $G_m^2$ 2

Fuel Segment: $G_m^i$ i

Fuel Segment: $G_m^I$ I

Geometric Information Of Fuel Segments

Assembly Numbering Information $ID_a$

Assembly Archival Information $RECORD_a$

Assembly Rod-replacing Information $RODC_a$

Assembly History Information $H_a$

Fuel Segment: $\Sigma_{m-ref}^{1,bu}$ $N_{m-ref}^{1,bu}(r)$ $\Sigma_{m-bra}^{1,bu,c}$ 1

Fuel Segment: $\Sigma_{m-ref}^{2,bu}$ $N_{m-ref}^{2,bu}(r)$ $\Sigma_{m-bra}^{2,bu,c}$ 2

Fuel Segment: $\Sigma_{m-ref}^{i,bu}$ $N_{m-ref}^{i,bu}(r)$ $\Sigma_{m-bra}^{i,bu,c}$ i

Fuel Segment: $\Sigma_{m-ref}^{I,bu}$ $N_{m-ref}^{I,bu}(r)$ $\Sigma_{m-bra}^{I,bu,c}$ I

Parameter Information Of Fuel Segments

Variation Of Nuclear Density Information $\Delta N_a^i$

Macroscopic Burnup Distribution Information $Bu_a^i(i)$, $N_a^i$

Arrangement Information Of Fuel Segments $A_a(i)$

FIG. 6

System for tracking three-dimensional assembly information of a reactor 100

Modeling Module 110

Model Division Module 120

Information Calculation Module 130

Storage Module 140

FIG. 7

32

System for tracking three-dimensional assembly information of a reactor 100

| Modeling Module 110 | Model Division Module 120 | Information Calculation Module 130 | Storage Module 140 | Information Query Module 150 |
| | | | | Information Updating Module 160 |

FIG. 8

# Modeling Module 110

Fuel Rod Modeling Module 111

Radial Modeling Module 115

Guide Tube Modeling Module 112

Reflector Modeling Module 116

Measurement Tube Modeling Module 113

Grid Modeling Module 114

Axial Modeling Module 117

FIG. 9

**REFERENCES CITED IN THE DESCRIPTION**

**Patent documents cited in the description**

- WO 2012170156 A1

- WO 2009134498 A2